# EUROPÄISCHE PATENTSCHRIFT

(11) **EP 3 834 910 B1**
(45) Veröffentlichungstag und Bekanntmachung des Hinweises auf die Patenterteilung: **20.08.2025**
(21) Anmeldenummer: 20213371.6
(22) Anmeldetag: 11.12.2020
(51) Int. Cl.: B01D 46/00, B01D 46/24, B01D 46/42, F23J 13/04, F23J 15/02

(54) **FEINSTAUBABSCHEIDUNGSEINRICHTUNG FÜR KLEINFEUERUNGSANLAGEN**
FINE DUST SEPARATION DEVICE FOR SMALL FIRING INSTALLATIONS
DISPOSITIF DE SÉPARATION DES POUSSIÈRES FINES POUR PETITES INSTALLATIONS DE COMBUSTION

(30) Priorität: 12.12.2019 DE 102019008612; 12.06.2020 DE 102020115589
(43) Veröffentlichungstag der Anmeldung: 16.06.2021
(73) Patentinhaber: dezentec ingenieurgesellschaft mbH, 53175 Bonn (DE)
(72) Erfinder:
(74) Vertreter: Weisbrodt, Bernd

(56) Entgegenhaltungen:
- EP-A2- 0 580 057
- WO-A1-2008/010242
- AT-A1- 502 443
- CA-A1- 2 922 150
- DE-A1- 102009 044 152
- DE-A1- 102015 103 337
- DE-A1- 102015 109 846
- DE-A1- 19 511 673
- DE-A1- 3 444 437
- DE-B- 1 249 441
- DE-C2- 4 130 640
- "Industrielle Luftfiltration - Grundlagen der Tiefenfiltration in der industriellen Praxis", 1 January 2013, VERLAG MODERNE INDUSTRIE, article CAESAR THOMAS: "Schlüsselfaktor Luftreinhaltug", pages: 4 - 70, XP055922882

## Beschreibung

Die vorliegende Erfindung betrifft eine Vorrichtung zur Filterung von Feinstaub, für Festbrennstoff-Kleinfeuerungsanlagen.

In der Öffentlichkeit wurden Feinstaubemissionen von Kleinfeuerungsanlagen wie Einzelraumfeuerungen, Kaminen, Öfen und kleineren Heizkesseln aufgrund ihrer Gesundheitsgefahren stark debattiert. Sowohl auf Bundesebene als auch teilweise auf kommunaler Ebene wurden Vorschriften in Kraft gesetzt, die Grenzwerte für die Staubemissionen von Kleinfeuerungsanlagen enthalten.

Beispielsweise fordert die gesetzliche Lage in Deutschland ab dem Jahre 2015 für neue Feuerungen diesbezüglich, dass Staubemissionen für Kleinfeuerungsanlagen auf 20 mg/m³ Rauchgas und für Einzelraumfeuerungen auf 40 mg/m³ Rauchgas, entsprechend der ersten Bundes-Immissionsschutzverordnung (1. BImSchV), zu begrenzen sind. Für bestehende Feuerungen gelten, abhängig von ihrem Alter, unterschiedliche Übergangsfristen.

Der überwiegende Teil, d.h. 80 - 95 % der Masse, des Feinstaubs weist eine Partikelgröße von deutlich weniger als einem Mikrometer auf. Daher kommen aus technischer Sicht zur Abscheidung dieser kleinen Partikel lediglich die elektrostatische Abscheidung sowie die Filtration in Betracht, welche Abscheidegrade im Submikrometerbereich von etwa 95% für elektrostatische Abscheider und über 99,5% für filternde Abscheider aufweisen [Quelle: Fritz, W.; Kern, H.: Reinigung von Abgasen, 3. Auflage, 1992, Vogel Buchverlag].

Es ist bekannt, dass verschiedene Systeme zur Staubabscheidung für Kleinfeuerungsanlagen am Markt angeboten werden, welche bei bestehenden Anlagen nachgerüstet werden können. Hierbei handelt es sich meistens um elektrostatische Abscheider, welche auch als E-Filter bezeichnet werden.

Bei derartigen E-Filtern wird über einen Hochspannungsgenerator und eine sogenannte Sprühelektrode mit negativer Ladung in dem zu reinigenden Gasstrom ein elektrostatisches Feld erzeugt, in dem sich Staubpartikel elektrostatisch aufladen. Aufgrund der elektrostatischen Feldkräfte bewegen sich die negativ geladenen Staubpartikel zu einer positiv oder neutral geladenen sogenannten Niederschlagselektrode, an der sie durch Anhaftung aus dem Gasstrom entfernt werden. Die am Markt verfügbaren E-Filter verfügen über einen konzentrischen Aufbau mit mittiger Sprühelektrode und Nutzung eines Abgasrohres als Niederschlagselektrode. Aufgrund dieser Geometrie verringert sich der freie Strömungsquerschnitt mit zunehmender Betriebsdauer durch die Abscheidung von Feinstaub aus dem Gasstrom und dessen Anlagerung an den Wänden des Rauchgaskanals. Hierdurch wird der Strömungswiderstand des Rauchgases erhöht, so dass eine Wartung in Form einer manuellen Reinigung, beispielsweise durch den Schornsteinfeger, erforderlich wird.

Ferner ist aus der DE 10 2008 059 432 eine Rauchgasreinigungseinrichtung bekannt, welche in einem Abgaskanal anzuordnen ist und sich keramischer Abgasfilter bedient, die durch Strömungsumkehr abzureinigen sind. Dabei gilt jedoch zu beachten, dass grundsätzlich die abzuscheidende Staubmenge pro Heizperiode (d.h. die Differenz zwischen Grenzwert und Rohgasstaubkonzentration) bei gängigen Feuerungen mit kleiner Feuerungswärmeleistung wie z.B. Kaminöfen oder Pelletkesseln eher gering ist, da sie meist weniger als 1 kg pro Heizperiode beträgt. Bei Feuerungen mit größerer Feuerungswärmeleistung wie z.B. Scheitholz- und Hackschnitzelkesseln mit beispielsweise 30 bis 50 kW können mit bis zu 20 kg deutlich höhere Staubmengen erreicht werden.

Die WO 2008/010242 A1 offenbart eine Vorrichtung zur Behandlung von Rauchgasen in einem Schornstein eines Heizkessels, wobei der Schornstein einen Mindestquerschnitt aufweist. Die Vorrichtung umfasst eine Abzweigung, die den Kamin in eine Hauptleitung und eine Bypass-Leitung unterteilt, und eine Reinigungsvorrichtung, die entlang der Bypass-Leitung angeordnet ist. Die Abzweigung ist statisch, und der Hauptkanal ist während des normalen Kesselbetriebs vollständig für den Durchgang geöffnet.

Die DE 10 2015 103 337 A1 offenbart ein Verfahren sowie eine Vorrichtung zum Abscheiden von Feinstaub aus einem Gas, insbesondere den Rauchgasen einer mit Biomasse befeuerten Kleinfeuerungsanlage. Dabei ist ein Reinigungsweg, in dem sich ein Feinstaub-Abscheider befindet, abseits des Hauptströmungsweges der Rauchgase angeordnet, sodass die Rauchgase ganz oder teilweise wahlweise über den Reinigungsweg geführt werden und dort der Feinstaub reduziert wird, oder ohne Abscheidung über den Hauptströmungsweg ungehindert abströmen können, der somit einen Bypass zum Reinigungsweg darstellt. DE 10 2015 103337 A1 offenbart drei Filtern in Serie mit abnehmender Porenweite. Die Filter sind Speicherfilter und implizit müssen sie geeignet sein, den Feinstaub zurückzuhalten.

Die Ansaugvorrichtung im Reinigungsweg kann umgekehrt werden, um die Filter rückzuspülen.Des weiteren gibt es eine Lehre in Caesar Thomas "Schlüsselfaktor Luftreinhaltung"1.1 In: "Industrielle Luftfiltration - Grundlagen der Tiefenfiltration in der industriellen Praxis", 1. Januar 2013 (2013-01-01), Verlag Moderne Industrie, Seiten 4-70. Es wird gelehrt, dass Abreinigungstechniken wie Vibration, Klopfen oder Schütteln oder pneumatisch durch Druckluftstoss oder Druckstoss für Oberflächenfilter, jedoch nicht für Tiefenfilter geeignet sind.

DE 10 2009 044152 A1 lehrt eine Abreinigung durch Vibration eines reinen elektrostatischen Filters, Abreinigung von Tiefenfiltern ist nicht erwähnt.

Die DE 12 49 441 B offenbart eine Anordnung zur Abzweigung eines Nebenstromes, insbesondere an Kaminzügen, der aus einer Nebenstromleitung und zwischengeschaltetem Gebläse besteht.

Die DE 34 44 437 A1 offenbart ein Gerät zur Reinigung von Kaminabgasen insbesondere zum nachträglichen Einbau, welches als Bypasssystem mit mindestens einer Zuströmungsöffnung und einer Abströmöffnung an den Kamin angeschlossen ist.

Die bekannten Filtertechniken sind insbesondere aufgrund der verwendeten automatisierten Abreinigung der Filter technisch aufwendig und auch fehleranfällig. Durch die parallel zur Staubabscheidung stattfindende Abscheidung von kondensierenden Teeren wird die Menge der real abgeschiedenen Verschmutzungsfracht deutlich erhöht. Dieser aus Umwelt- und Gesundheitsschutzgründen positive Nebeneffekt der Staubabscheidung führt jedoch zu einer Verringerung der Standzeiten der eingesetzten Filtermaterialen, welche durch die größeren abgeschiedenen Mengen deutlich stärker belastet werden.

Vor diesem Hintergrund ist es Aufgabe der Erfindung, eine Vorrichtung zur Staubabscheidung zur Verfügung zu stellen, die sowohl robust in den Betriebseigenschaften und unempfindlich gegen Störungen und Fehlbedienungen ist, als auch über ausreichend lange Standzeiten ohne weitere Wartung verfügt.

Zur Lösung dieser Aufgabe wird eine Vorrichtung zur Filterung von Feinstaub gemäß Patentanspruch 1 vorgeschlagen. Vorteilhafte Ausgestaltungen der Erfindung sind in den Unteransprüchen 2 bis 13 gekennzeichnet.

Eine vorteilhafte Ausgestaltung der Erfindung sieht ferner eine mit der Absaugeinheit verbundene Rezirkulationseinheit vor, umfassend
- eine mit der Austrittsöffnung mittels einer zweiten Verbindungseinheit verbundene Rezirkulationsöffnung, und
- ein Leitblech, welches dazu eingerichtet ist, eine Mischung eines aus der Austrittsöffnung strömenden Reingases mit dem Rauchgas zu veranlassen,

Erfindungsgemäß wird angesichts der vergleichsweise geringen Staubmengen zunächst die Verwendung von Tiefen- bzw. Speicherfiltern als einfache und preiswerte sowie robuste Alternative zu automatisch abzureinigenden Filtern vorgeschlagen.

Solch eine Speicher- oder auch Tiefenfiltration ist beispielsweise aus dem Bereich der Reinigung von bereitgestellten Atemgasen, beispielsweise im Bereich der Klima- oder Belüftungstechnik bekannt. Im Bereich der Partikelgröße von Feinstäuben aus Kleinfeuerungsanlagen verfügen filternde Abscheider, verglichen mit elektrostatischen Abscheidern, über eine etwa 5% bessere Abscheideleistung [Quelle: Fritz, W.; Kern, H.: Reinigung von Abgasen, 3. Auflage, 1992, Vogel Buchverlag]. Erfindungsgemäß wird demnach eine Lösung vorgeschlagen, welche sowohl eine robuste und verlässliche Speicherfiltration erreicht als auch eine ausfallsichere Betriebsweise der Filteranlage erlaubt.

Gemäß der Erfindung ist die Rauchgasreinigungseinrichtung sowohl zum Anschluss an Schornsteine von Feststoff-Kleinfeuerungsanlagen, d.h. am Ende eines Rauchgasweges ohne Rauchgasreinigungseinrichtung, als auch zur Integration in den Rauchgasweg einer insbesondere für Feststoffe geeigneten Kleinfeuerung. Das Rauchgas einer Feuerungsanlage wird in die durch die erfindungsgemäße Vorrichtung realisierte Reinigungseinrichtung eingeleitet, dort gereinigt und letztlich an die Umwelt abgegeben.

Die erfindungsgemäße Rauchgasreinigungsvorrichtung weist mit der Absaugeinheit und der Filtereinheit mindestens zwei räumlich voneinander getrennte Baugruppen auf, die durch mindestens ein Verbindungselement, das beispielsweise als isolierter Metallschlauch ausgeführt ist, miteinander verbunden und in Richtung der Umgebung abgedichtet sind. Zur Vereinfachung des Anschlusses dieser isolierten Metallschläuche an die Absaug- und Filtereinheit sowie die Rezirkulationseinheit können vorteilhafterweise Schnellverschlusssysteme wie Bajonettverschluss, Feuerwehrkupplungen, Kamlock-Kupplungen oder dergleichen Anschlüsse verwendet werden.

Zur Überwindung des betriebsnotwendigen Differenzdrucks der Filtereinheit wird ein Lüfter verwendet, der bevorzugt als Radialventilator ausgeführt ist. Der Lüfter befindet sich bevorzugt im Gehäuse der Filtereinheit. Das Gehäuse der Filtereinheit besteht bevorzugt aus sogenannten Sandwichplatten, bei denen ein etwa 30 bis 50 Millimeter starker Kern aus thermisch isolierender Mineralwolle von verzinktem Blech umschlossen ist. Diese Bauart ist mechanisch stabil, wetterfest und verhindert vorteilhafterweise den Ausfall von Kondensat durch ein zu starkes Auskühlen des Rauchgases.

Die erfindungsgemäßen Lösungen sind in erster Linie, gemäß den gesetzlichen Anforderungen der 1. BImSchV, zur Abscheidung von Feinstaub aus dem Abgas von Feststoff-Kleinfeuerungsanlagen einzusetzen. Es hat sich überraschend herausgestellt, dass gemeinsam mit dem Feinstaub auch Kondensatbestandteile wie Teere mit abgeschieden werden, da die in der erfindungsgemäßen Vorrichtung herrschenden Temperaturen unterhalb der Kondensationspunkte der Teere von etwa 400 Grad Celsius liegen. Dieses Gemisch an Staub- und Teer wird im Folgenden auch als Verschmutzungsfracht bezeichnet.

Gemäß einer bevorzugten Ausgestaltung ist vorgesehen, dass der freie Strömungsquerschnitt der ersten Verbindungseinheit und/oder der zweiten Verbindungseinheit geringer ist als der freie Strömungsquerschnitt des Anschlussrohrs der Absaugeinheit an den Rauchgasweg. Durch Verwendung dieser kleineren Querschnitte können die Verbindungselemente erheblich material- und platzsparender und besser montierbar ausgeführt werden. So liegt beispielsweise der Durchmesser des Anschlussrohres bei vielen Kaminen in der Praxis in einem Bereich von etwa 130 mm bis 150 mm. Die Innendurchmesser der Verbindungselemente können vorteilhafterweise in den Größe DN 100, DN 80, DN 65, DN 50 oder sogar geringer ausgeführt werden. Die Vorteile hinsichtlich Materialeinsatz und Handhabbarkeit sind insbesondere bei einer doppelten Leitungsführung und mit einer jeweils zusätzlichen Isolierschicht gegeben.

Vorteilhafterweise ist ferner vorgesehen, dass die Absaugöffnung entlang eines Rohrumfangs der Absaugeinheit und/oder dass die Rezirkulationsöffnung entlang eines Rohrumfangs der Rezirkulationseinheit vorgesehen ist. Dies hat den Vorteil, dass eine möglichst große Menge an zu reinigendem Rauchgas der Filtereinheit zugeführt und von dieser, nach erfolgter Reinigung, zurück zur Rezirkulationseinheit geführt werden kann.

Vorzugsweise ist ein im unteren Bereich der Absaugöffnung oder ein unterhalb der Absaugeinheit angeordneter Temperaturfühler vorgesehen, welcher vorteilhafterweise dazu eingerichtet ist, bei Überschreiten einer vordefinierten Temperatur des Rauchgases den Lüfter zu aktivieren. Dadurch wird ein unnötiger Betrieb des Lüfters vermieden. Bei einer rauchgasseitigen Überschreitung der maximal zulässigen Betriebstemperatur, insbesondere für die Filterelemente, kann der Ventilator vorteilhafterweise abgeschaltet werden um so eine unzulässige Überhitzung der Filtereinheit wirksam zu unterbinden. In diesem Fall würde das Rauchgas kurzzeitig ungefiltert an die Atmosphäre abgeleitet werden.

Gemäß einer bevorzugten Ausgestaltung weist die Vorrichtung eine Einheit zur elektrostatischen Voragglomeration auf, welche eine Sprühelektrode, um welche sich ein Hochspannungsfeld ausbildet, einen mit der Sprühelektrode verbundenen Isolator, welcher ein Überschlagen der Hochspannung auf umgebende Bauteile verhindert, und eine mit dem Isolator mittels einem Hochspannungskabel verbundene Hochspannungsquelle umfasst. Eine weitere bzw. nochmalige Verbesserung dieses Effektes kann vorteilhafterweise durch das Einbringen eines großflächigen Niederschlagsgitters erzielt werden, welches vorteilhafterweise anströmseitig vor den Filterelementen angeordnet wird. Durch das Vorsehen einer elektrostatisch Voragglomeration können insbesondere die Standzeiten der Filtermaterialien erhöht werden, da die Filter durch wenige agglomerierte große Partikel, die eher eine poröse Schicht anströmseitig auf den Filterelementen bilden, wesentlich weniger belastet werden als durch viele sehr kleine Partikel, die in die Tiefe des Filtermaterials eindringen.

Es ist als Filterelement ein Tiefenfilter vorgesehen ist, welches dazu eingerichtet ist, Feinstaub, Kondensat und/oder Kondensatbestandteile abzuscheiden. Ein derartiges Tiefenfilter bietet im Bereich der Partikelgröße von Feinstäuben aus Kleinfeuerungsanlagen ein deutlich besseres Verhältnis aus bzw. von Abscheideleistung und Standzeit als andere Filterarten.

Gemäß einer bevorzugten Ausgestaltung ist als Filterelement ein Vorfilter gemäß der Filterklasse M5 oder M6 und ein Feinfilter gemäß der Filterklasse F7 bis F9 vorgesehen, wobei zwischen dem Vorfilter und dem Feinfilter eine Trennschicht vorgesehen werden kann, die vorzugsweise aus einem grobporigen Material besteht, insbesondere um Verklebungen an der Grenzschicht zwischen den Filterelementen zu verhindern. Durch eine derartige Anordnung wird eine mehrstufige Filterung erreicht, welche zu einem hohen Grad der Reinigung des Rauchgases führt. Filtermaterialien die nicht gemäß DIN EN 779 (2012) in diese vorgenannten Arten von Filterklassen klassiert sind, werden bei vergleichbarer Abscheideleistung als gleichwertig betrachtet. Auch bei anderen oder gar keinen Bezeichnungen der Filterklasse gelten diese gleichwertigen Filter als nutzbar.

Dazu kann vorteilhafterweise als Filterelement eine Reihenschaltung eines separat angeordneten Vorfilters und eines separat angeordneten Feinfilters vorgesehen sein, wobei das Vorfilter und das Feinfilter mittels wenigstens einer Trennwand räumlich voneinander getrennt sind. Dies hat unter anderem den Vorteil, dass ein einfacherer Austausch des jeweiligen Filters möglich ist.

Beschrieben hierin ist auch, dass anstelle einer Reihenschaltung von Filtermaterialien unterschiedlicher Feinheit, beispielsweise grob/fein, grob/mittel/fein oder dergleichen, auch sogenannte gradierte Filtermaterialien eingesetzt werden können. Diese Filtermaterialien verfügen vorteilhafterweise über unterschiedlich stark verdichtete Bereiche. In Strömungsrichtung des Gases nimmt die Verdichtung des Filtermaterials vorteilhafterweise zu, so dass eine Reihenschaltung, beispielsweise grob/fein oder grob/mittel/fein, innerhalb eines Stückes Filtermaterial erfolgen kann.

Es ist ein gradiertes Filtermaterial daher als gleichwertig zu einer Reihenschaltung von einzelnen Filtermaterialien mit einzelnen Filterstufen anzusehen.

Vorzugsweise weist die Filtereinheit ein zusätzliches Filterelement für den Betriebsbeginn auf, welches dem Filterelement nachgeschaltet ist. Insbesondere bei einem Betrieb der Vorrichtung mit frischen bzw. neuen Feinstaubfiltern kann durch ein solches zusätzliches Filterelement eine zuverlässige Reinigung des Rauchgases erreicht werden.

Gemäß einer weiteren vorteilhafte Ausgestaltung sind in der Filtereinheit ferner ein Schalldämpfer und eine Umschalteinheit vorgesehen, wobei die Umschalteinheit dazu dient und vorteilhafterweise eingerichtet ist, dass Rauchgas während des Betriebs mit frischen Filtern so lange über das zusätzliche Filterelement zu leiten, bis der Druckverlust über das zusätzliche Filterelement einen vorgegebenen Druckverlust erreicht hat. Alternativ und/oder ergänzend zur Steuerung über den Druckverlust kann die Umschalteinheit vorteilhafterweise auch nach einer vorgegebenen Betriebszeit so schalten, dass das zusätzliche Filter umfahren bzw. umgangen wird. Bis zu diesem Zeitpunkt der Umschaltung sind die frischen Filterelemente in der Regel so stark beladen, dass sie eine ausreichend hohe Reinigungswirkung erzielen. Das Material des zusätzlichen Filters kann vorteilhafterweise aus einer Packung Mineralwolle oder Wolle, Baumwolle oder Leinen bestehen. Dieses Material wird nicht regeneriert und beim Wechsel der Filterelemente ausgetauscht und vorzugsweise thermisch entsorgt. Es kann jedoch auch vorgesehen sein, dass das Gas parallel das zusätzliche Filterelement und den Schalldämpfer durchläuft oder sowohl das zusätzliche Filterelement als auch den Schalldämpfer durchläuft.

Gemäß einer weiteren bevorzugten Ausgestaltung umfasst die Filtereinheit ferner eine Entschwefelungseinrichtung bzw. Geruchsabscheidungseinrichtung.

Vorzugsweise umfasst die Filtereinheit ferner ein Formgebungselement, welches dazu eingerichtet ist, einem Zusammenfallen von Filterelementen entgegenzuwirken, insbesondere bei einem Betrieb der Vorrichtung mit geringen Volumenströmen. Ein solches Formgebungselement kann im Inneren von Filtertaschen oder als metallische Trennschicht zwischen einem Vorfilter und einem Feinfilter vorgesehen sein. Da sich auf diese Weise ein Zusammenfallen der Filterelemente vermeiden lässt, wird vorteilhafterweise die wirksame Filterfläche und damit die Standzeit erhöht. Ferner sinkt der Wartungsaufwand der Vorrichtung erheblich.

Ein besonderes Merkmal ist die bauliche Trennung von dem in dem in der Achse des Rauchgasstrom befindlichen Teils, bestehend aus Absaugeinheit, Rezirkulationseinheit und elektrostatischer Voragglomeration, und der Filtereinheit.

Durch diese Konstruktion entfällt vorteilhafterweise der separat konstruierte Bypassraum komplett, der aus Sicherheitsgründen für eine ungefilterte Abführung der Rauchgase an die Atmosphäre erforderlich ist und der bei anderen Feinstaubfilterkonzepten bisher erforderlich ist.

Die erfindungsgemäße Konstruktion gewährleistet vorteilhafterweise einen sicheren und robusten Betrieb ohne dass fehleranfällige Rauchgasklappen oder sonstige Drosselorgane benötigt werden. Durch die bauliche Trennung der Filtereinheit können erheblich größere Filterflächen verwendet werden als beispielsweise bei Feinstaubfilterkonstruktionen, die direkt auf dem Kamin montiert werden. Bei derartigen vorbekannten Konstruktionen ist bauartbedingt vorgegeben, dass diese die Maße des Kamins nicht wesentlich überschreiten können und auch in der Höhe begrenzt sind. Bei einem durchschnittlichen Kaminaußenquerschnitt von 50 cm mal 50 cm ist es bei einer derartigen vorbekannten Feinstaubfilterkonstruktion aufgrund der Geometrie und den Baumaßen 50 cm mal 50 cm mal 50 cm kaum möglich mit einem Filter mit einer Tiefe von etwa 20 mm eine Filterfläche von mehr als einem Quadratmeter unterzubringen, insbesondere wenn der erforderliche Raum für den Bypass zwischen den einzelnen Filterelementen und die Seitenkammer mit Ventilator etc. abgezogen wird. Daraus resultiert eine erhebliche Einschränkung der Standzeit.

Bei der Konstruktion gibt es demgegenüber keine vergleichbare Limitierung der Filterfläche, so dass eine im Vergleich erheblich höhere Standzeit einfach durch eine Erhöhung der Filterfläche zu realisieren ist. Im Falle von Betriebsstörungen, wie beispielsweise Stromausfall oder mangelnder Wartung der Filterelemente, folgt bei der Lösung das Rauchgas dem Weg in Verlängerung der Achse des ursprünglichen Rauchgasweges ohne Feinstaubfilter, beispielsweise dem Kamin.

Vorteilhafterweise wird das Rauchgas nur im bestimmungsgemäßen Betrieb durch den in der Absaugeinheit herrschenden Unterdruck aus der Achse des ursprünglichen Rauchgasweges abgelenkt und über eine Verbindungseinheit der Filtereinheit zugeleitet.

Die Lösung besteht aus einem Teil bzw. einer Komponente, nämlich den in der Achse des Rauchgasstrom befindlichen Teilen Absaugeinheit, Rezirkulationseinheit und elektrostatischer Voragglomeration, der bzw. die während des praktischen Betriebes nur von Fachpersonal gewartet werden sollte. Insbesondere die elektrostatische Voragglomeration birgt aufgrund der Hochspannung eine Gefahrenquelle, die eine Wartung durch Laien ausschließt. Durch die räumliche Nähe zur Sprühelektrode und dem Hochspannungskabel sollten Laien daher auch Wartungen an der Absaugeinheit und der Rezirkulationseinheit unterlassen. Bei einer Vielzahl von Häusern befindet sich der Kamin an unzugänglichen Stellen auf dem Dach, so dass eine erhöhte Absturzgefahr bei der Begehung besteht. Diese Absturzgefahr ist durch den Einsatz von geschultem Fachpersonal mit entsprechenden Sicherungsgurten etc. bis nahe Null reduzierbar.

Die in der Achse des ursprünglichen Rauchgasweges befindlichen Komponenten sollten bei der erfindungsgemäßen Lösung ausschließlich von geschultem Fachpersonal mit den entsprechenden Sicherheitsvorkehrungen gewartet werden.

Die Filtereinheit der Lösung ist im Vergleich dazu ein vergleichsweise einfaches Bauteil. Wenn die erfindungsgemäße Filtereinheit auf einem gut zugänglichen Flachdach aufgestellt ist, könnte der Wechsel der Filterelemente insofern auch durch Laien erfolgen. Auch bei Schrägdächern gibt es Bauteile wie Trittstufen für Schornsteinfeger, Geländer Einsatzbauteile um beispielsweise Balkone nachzurüsten, so dass damit zumindest theoretisch eine Begehung auch durch Laien gefahrlos möglich wird. Die erfindungsgemäße Filtereinheit kann insofern unter günstigen Umständen auch durch Laien gewartet werden. Anderenfalls sollte ein Austausch der Filterelemente ausschließlich durch Fachfirmen bzw. Fachpersonal erfolgen.

Weitere Einzelheiten, Merkmale und Vorteile werden nachfolgend anhand der in den Figuren der Zeichnungen dargestellten Ausführungsbeispiele näher erläutert. Dabei zeigen:
- Fig. 1: ein Ausführungsbeispiel der Vorrichtung zur Filterung von Feinstaub, insbesondere Darstellung der Hauptkomponenten Kamin (10), Absaugeinheit (30), Filtereinheit (60), Rezirkulationseinheit (40), Verbindungseinheiten (38, 48), elektrostatischer Voragglomeration (20) und Regenschutz (16);
- Fig. 2: ein weiteres Ausführungsbeispiel der Vorrichtung, insbesondere mit Fluidwegen, vorliegend bei einer Auf-Dachmontage mit Rezirkulation;
- Fig. 3: ein weiteres Ausführungsbeispiel der Vorrichtung in Teil-Explosionsdarstellung der Baugruppen;
- Fig. 4: ein Ausführungsbeispiel der Absaugeinheit und der Rezirkulationseinheit, vorliegend Ausführung mit Rezirkulation und Montageart im Rauchrohr, beispielsweise zur Anwendung bei nachträglich installierten isolierten Rauchgasleitungen an den Außenseiten von Häusern;
- Fig. 5: ein weiteres Ausführungsbeispiel der Vorrichtung, insbesondere mit Fluidwegen, vorliegend bei einer Auf-Dach-Montage, insbesondere mit Rohgasverdünnung mit rezirkuliertem warmem Reingas;
- Fig. 6: ein Ausführungsbeispiel der Absaugeinheit, insbesondere mit Fluidwegen, vorliegend bei einer Auf-Dach-Montage, insbesondere Rohgasverdünnung mit kalter Umgebungsluft;
- Fig. 7: ein Ausführungsbeispiel eines Rauchgasaustritts in die Atmosphäre bei einem Kamin ohne Absaugeinheit und ohne Rezirkulationseinheit;
- Fig. 8: ein Ausführungsbeispiel eines Rauchgasaustritts in die Atmosphäre bei einem Kamin mit Absaugeinheit und ohne Rezirkulationseinheit, beispielsweise für Betriebsstörungen wie Stromausfall oder mangelnde Filterwartung;
- Fig. 9: ein Ausführungsbeispiel eines Rauchgasaustritts in die Atmosphäre bei einem Kamin mit Absaugeinheit und mit Rezirkulationseinheit, beispielsweise für Betriebsstörungen wie Stromausfall oder mangelnde Filterwartung;
- Fig. 10: ein erstes Ausführungsbeispiel einer Filtereinheit in seitlicher Schnittdarstellung mit Gehäuse (62), Wartungsdeckel (64), Filterelement (50), Ventilator (65), Rohgaseintritt (66) und Reingasaustritt (68);
- Fig. 11: ein zweites Ausführungsbeispiel einer Filtereinheit, ähnlich Fig. 10, jedoch mit Seitenkammer (67), u.a. zur Rauchgasführung, und in Kombination mit elektrostatischer Voragglomeration einsetzbarem Niederschlagsgitter (29);
- Fig. 11a: alternative Ausgestaltung zu Fig. 11;
- Fig. 12: ein drittes Ausführungsbeispiel einer Filtereinheit, vorliegend mit durch Trennwände (70) erzielter Reihenschaltung von Vorfilter (52) und Feinfilter (56), welche optional auch als hier nicht dargestellte Parallelschaltung von mindestens zwei gleichartigen Filterelementen (50) zur Erhöhung der Filterfläche und damit der Standzeiten sowie für den Einsatz bei größeren Feuerungen mit größeren Rauchgasvolumenströmen vorgesehen sein kann;
- Fig. 12a: ein viertes Ausführungsbeispiel einer Filtereinheit, ähnlich Fig. 12, jedoch mit mindestens einer anströmseitig zum jeweiligen Filter (52, 56) angebrachten Einbringung von Precoatmaterial (71);
- Fig. 13: ein Ausführungsbeispiel eines Zusatzfilters (78) mit Umschalteinheit (76) und/oder Schalldämpfers (72);
- Fig. 14: ein Ausführungsbeispiel eines Filterelements mit Vorfilter (52), Feinfilter (56) und Trennschicht (54);
- Fig. 15: ein Ausführungsbeispiel einer Filtereinheit umfassend eine Entschwefelungsvorrichtung bzw. Geruchsminderungsvorrichtung, insbesondere in verschiedenen Varianten;
- Fig. 16: ein erstes Ausführungsbeispiel der Vorrichtung zur Filterung von Feinstaub mit entsprechenden Temperaturmessstellen mit Rezirkulationseinheit;
- Fig. 17: ein zweites Ausführungsbeispiel der Vorrichtung zur Filterung von Feinstaub mit entsprechenden Temperaturmessstellen ohne Rezirkulationseinheit;
- Fig. 18: ein erstes Ausführungsbeispiel eines Formgebungselements (58) innerhalb einer Filterelements (50), bestehend aus Vorfilter (52), Trennschicht (54) und Feinfilter (56), hier Darstellung im Längsschnitt durch eine Filtertasche;
- Fig. 19: ein zweites Ausführungsbeispiel eines Formgebungselements (58) innerhalb einer Filtereinheit als Darstellung im Querschnitt durch mehrere nebeneinander befindliche Filtertaschen eines Filterelements (50), bestehend aus Vorfilter (52), Trennschicht (54) und Feinfilter (56);
- Fig. 20: ein Ausführungsbeispiel für eine zusätzliche Temperaturerhöhung bzw. -verringerung des Rauchgases sowie eine weitere einfache Variante der Befestigung eines der Verbindungselemente (38, 48);
- Fig. 21: ein Ausführungsbeispiel eines Filterelements, welches durch mechanische Bewegung abreinigbar ist;
- Fig. 22: ein weiteres Ausführungsbeispiel eines Filterelements welches durch mechanische Bewegung abreinigbar ist;
- Fig. 23: ein weiteres Ausführungsbeispiel eines Filterelements welches durch mechanische Bewegung abreinigbar ist;
- Fig. 24: ein Ausführungsbeispiel eines Filterelements, mit Staubfangwannen, hier mit optionaler elektrischer Zündvorrichtung;
- Fig. 25: ein weiteres Ausführungsbeispiel eines Filterelements, mit Staubfangwannen und optionaler elektrischer Zündvorrichtung;
- Fig. 26: eine beispielhafte erfindungsgemäße Anordnung eines Feinstaubabscheiders, wobei ein elektrostatischer Abscheider zur Staubabscheidung eingesetzt wird und eine Druckmessung im Kamin erfolgt (in Kombination mit Filter und/oder E-Filter);
- Fig. 27: eine beispielhafte Befestigung einer Absaugeinheit an einem Kamin;
- Fig. 28: eine beispielhafte Ausführung einer Precoateinbringung in Patronenausführung, links mit Treibladung und rechts mit externer Druckgaszuführung;
- Fig. 29: eine beispielhafte Ausführung der anströmseitig der Filtermaterialien vorgesehenen Einbringung von Benetzungsmitteln; und

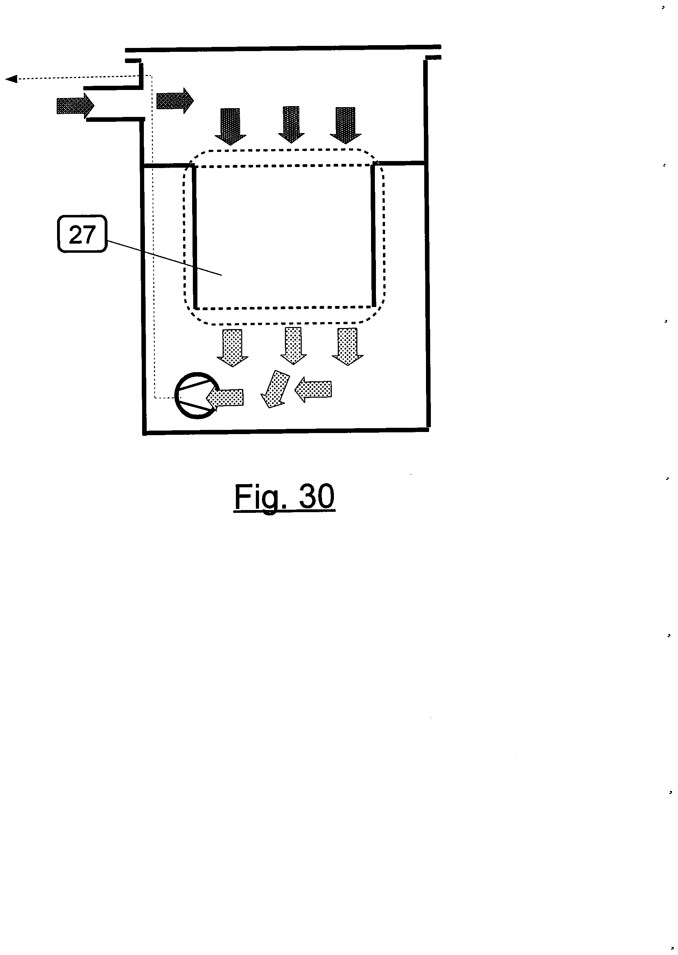

- Fig. 30: eine beispielhafte Ausführung, bei der eine separate Geruchsminderung vorgesehen ist.

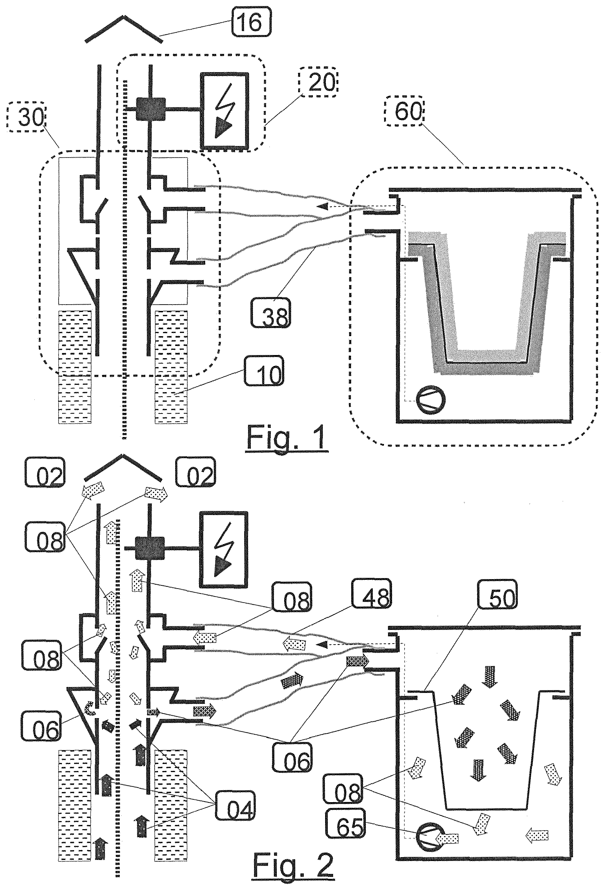

In Fig. 1 ist eine Gesamtübersicht einer Vorrichtung zur Filterung von Feinstaub dargestellt, welche eine Absaugeinheit 30, eine Rezirkulationseinheit 40, eine Filtereinheit 60 und eine optional vorgesehene Vorrichtung 20 zur elektrostatischen Voragglomeration umfasst. Die Absaugeinheit 30 ist dabei die erste Baugruppe, die in den Rauchgasweg 10 der Feuerungsanlage angeschlossen wird. Die Filtereinheit 60 als zweite, über ein Verbindungselement 38 angeschlossene Baugruppe beinhaltet mindestens ein Filterelement 50, welches als Tiefenfilter ausgeführt ist. Zur Überwindung des betriebsnotwendigen Differenzdrucks der Filtereinheit 60 wird ein Lüfter 65 verwendet, der bevorzugt als Radialventilator ausgeführt ist. Der Lüfter 65 befindet sich bevorzugt im Gehäuse 62 der Filtereinheit 60. Auf die optional vorgesehene Vorrichtung zur Reingas-Rezirkulation über die Verbindungseinheit 48 sowie der elektrostatischen Voragglomeration wird im weiteren Verlauf der Beschreibung näher eingegangen.

Der freie Strömungsquerschnitt der Absaugeinheit 30 und/oder der Rezirkulationseinheit 40 orientiert sich in erster Linie am freien Strömungsquerschnitt der Feuerungsanlage selbst, kann jedoch über definiert lange Strecken in gewissem Maße, beispielsweise durch Leitbleche der Absaugeinheit 30 und/oder Leitbleche 49 der Rezirkulationseinheit 40 verengt werden. Entscheidend ist, dass diese Verengung keine wesentlichen negativen Auswirkungen auf den Betrieb der Feuerungsanlage hat. Insbesondere darf sich durch eine Verengung nicht der Strömungswiderstand für die Abführung der Rauchgase in einem solchen Maße erhöhen, dass Rauchgas 4 aus der Feuerungsanlage, beispielsweise in den umgebenden Wohnraum austritt. Wenn ein solcher ungewollter Austritt von Rauchgas 4 ausgeschlossen werden kann, ist eine Einschnürung des Rauchgasweges in gewissem bzw. begrenztem Umfang zulässig.

Durch die Konstruktion wird sichergestellt, dass bei inaktiver Rauchgasreinigungseinrichtung, beispielsweise bei Betriebsstörungen wie einem Stromausfall oder dem Vorhandensein verstopfter Filter infolge mangelnder Wartung, das Rauchgas an der Absaugeinheit 30 vorbeiströmen kann und ungereinigt an die Atmosphäre abgeleitet werden kann. Bei den zuvor genannten Betriebsstörungen ist der Unterdruck, der für eine Ableitung der Rauchgase von durch die Absaugeinheit 30 über das Verbindungselement bzw. die Verbindungseinheit 38 in Richtung der Filtereinheit 60 sorgt, entweder bei verstopften Filtern zu gering oder bei Stromausfall nicht vorhanden.

Fig. 2 zeigt, analog zur Gesamtübersicht der Fig. 1, eine Darstellung der Gasströme während des Betriebs der Vorrichtung, wobei dunkle Pfeile ein Rohgas 4 mit einem hohem Feinstaubanteil von beispielsweise 100 mg/m³_{N} und helle Pfeile ein Reingas 8 mit einem geringem Feinstaubanteil von beispielsweise 10 mg/m³_{N} kennzeichnen. Die Umgebungsluft 2 mit einem Feinstaubanteil von beispielsweise 0 mg/m³_{N}, eine Mischung aus Rohgas 4 vermischt mit rezirkuliertem Reingas 8 ist mit dem Bezugszeichen 6 gekennzeichnet und weist einen Feinstaubgehalt von beispielsweise 85 mg/m³_{N} auf. Das weiter in Fig. 2 dargestellte Filterelement 50 ist vorliegend als Taschenfilter ausgeführt und der Lüfter 65 ist beispielsweise ausgeführt als Radialventilator. Wird dieser Radialventilator, oder auch Halbradialventilator, betrieben, so entsteht durch den Unterdruck ein Gasstrom von Rauchgas 4, welcher durch die Absaugöffnung 34 der Absaugeinheit 30 zu Speicherfilteranordnungen, genauer durch das Filtermaterial in der Filtereinheit, geführt wird. Das Rauchgas 4 nimmt also bei Betrieb des Radialventilators nicht den weiterhin freien Weg entlang der Achse des Rauchgaswegs 10 von der Feuerung, sondern - aufgrund der Druckreduzierung in der Absaugeinheit 30 - den Weg durch die Filtereinheit 60, wobei Partikel der Verschmutzungsfracht abgeschieden werden. Bei diesem Abziehen von Rauchgas 4 wird ein vergleichbares Volumen auch durch die abstromseitige Öffnung der Absaugeinheit 30 abgezogen, so dass die Filteranordnungen von einem Gemisch aus Rauchgas 4 und rezirkuliertem Reingas 8 bzw. Umgebungsluft 2 durchströmt werden. Kommt es während des Betriebs der Feuerungsstätte zu einer verminderten Reinigungswirkung, beispielsweise durch Ausfall des Lüfters 65 oder durch das Zusetzen des Fasermaterials, ist in keinem Moment der gefahrlose Betrieb der Feuerungsstätte gefährdet. Statt den Weg über die Filteranordnungen der Filtereinheit 60 zu nehmen, nimmt dann das Rauchgas 4 den ungefilterten Weg durch den inneren Teil der Rezirkulationseinheit Richtung Atmosphäre. Der äußere Teil der Rezirkulationseinheit mit dem Rezirkulationsraum 44 wird dabei nicht durchströmt. Da der Radialventilator hinter dem Filterelement 50, also im Reingasweg angeordnet ist, kommt dieser mit Schmutzpartikeln aus dem Rauchgas 4 weniger in Kontakt, was zu einer Lebensdauererhöhung und Minderung der Wartungsintensität führt. In Abhängigkeit von der Verschmutzung sind die Filterelemente 50 nach einer definierten Anzahl von Betriebsstunden auszutauschen. Vorzugsweise ist vorgesehen, dass das Filtermaterial aus einer, beispielsweise bis 180 °C temperaturbeständigen, Synthetikfaser besteht und als Tiefenfilter in Taschenform oder als Beutelfilter in Beutelform ausgeführt ist. Des Weiteren sind Ausführungen in Form von Filterschläuchen oder Kassetten möglich. Alternativ können auch künstliche Mineralfasern wie Glaswolle oder Mineralwolle zum Einsatz kommen. Ein Vorteil der Synthetikfaser besteht in der einfacheren Möglichkeit der Entsorgung über den Weg der allgemeinen Müllverbrennung.

Die Filterelement können als keramische oder metallische Filterfilterelemente ausgeführt werden. Keramische Filterelemente können als flexible Keramikfasermatten oder als Formteile aus flexiblen Keramikfasermatten ausgeführt sein. Metallische Filterelemente können beispielsweise Metallfasern oder Metallgestricke aus dünnen Drähten enthalten. Bei Metallfiltern besteht die Möglichkeit der Reinigung der ausgebauten Filterelemente beispielsweise im Ultraschallbad. Im eingebauten Zustand können thermisch hoch beständige Metall- oder auch Keramikfilterelemente "freigebrannt" werden, in dem die abgeschiedenen kohlenstoffhaltigen Feinstäube kontrolliert mit hoher Temperatur und ausreichend Sauerstoff beaufschlagt werden. Dies kann beispielsweise über die Einbringung von Heißluft bzw. Heißgas über den Stutzen 94 geschehen.

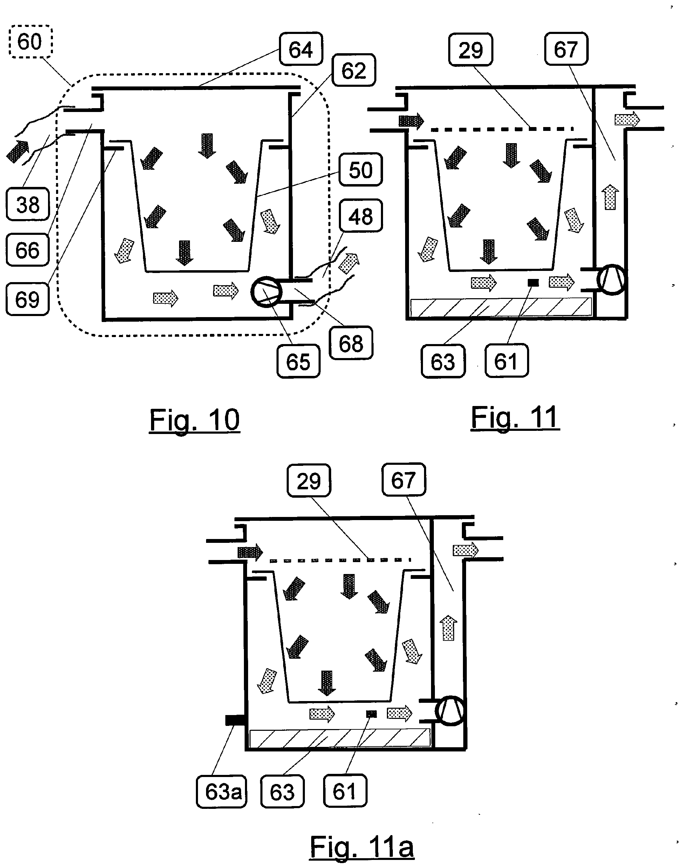

Vorliegend ist der Reingasaustritt 68 (in Fig. 2 verdeckst dargestellt; sichtbar beispielsweise in Fig. 10) so ausgebildet, dass wenigstens ein Teil des Reingases 8 über die Verbindungseinheit 49 und die Rezirkulationseinheit 40 in einen der Absaugeinheit 30 in Strömungsrichtung des Rauchgases 4 nachgeschalteten Bereich geleitet wird. Durch diese - teilweise oder vollständige - Rezirkulation von gereinigtem, warmem Rauchgas 8, wird die Mischtemperatur des in der Absaugeinheit 30 abgesaugten Gases 6 erhöht. Anstelle von kalter Frischluft 2 wird das von der Feuerung kommende Rauchgas 4 mit warmem rezirkuliertem Reingas 8 gemischt. Vorteilhaft bei dieser Erhöhung der Mischtemperatur des zur Filtereinheit geleiteten Gases ist insbesondere die Verminderung des Anfalls von kondensierender Feuchte - in Form von Wasser - aus dem Abgas.

Ein geringfügiger Anfall von Kondensat beim Anheizen der Feuerung und Start der kalten Filtereinheit gehört zum Normalbetrieb. Eine übermäßiges Auskondensieren von Feuchte ist während des Dauerbetriebs zu vermeiden, da anderenfalls eine Ansammlung von viel Wasser zum einen das Gewicht der Filtereinheit erhöhen und zum anderen bei einer längeren Phase des Nicht-Betriebs bei Frost das Gehäuse durch Eissprengung beschädigt werden kann. Bei geeigneter Betriebsführung kann bereits ausgefallenes Kondensat vorteilhafterweise wieder verdampft werden, so dass es zu keiner stetig steigenden Kondensatmenge kommt. Zur zusätzlichen Sicherheit kann ein Feuchtigkeitssensor 61 im Bodenbereich die Kondensatmenge überwachen. Oberhalb eines zulässigen Maximalwertes wird die Filtereinheit vorteilhafterweise außer Betriebs genommen und es kann ein Wartungshinweis an den Betreiber oder den Schornsteinfeger gesendet oder übermittelt werden, beispielsweise über eine Mobilfunkverbindung oder dergleichen.

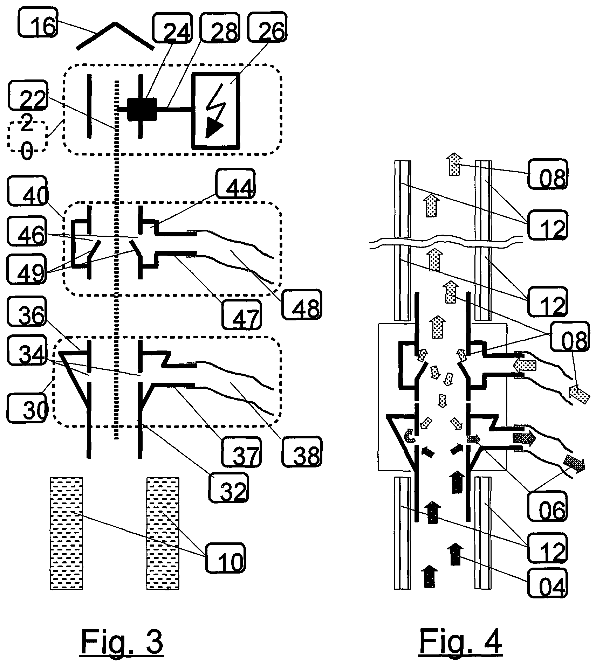

In Fig. 3 ist eine Übersichtsdarstellung einer Absaugeinheit 30 und einer Rezirkulationseinheit 40, welche auf einem Kamin 10 montiert sind, dargestellt. Oberhalb der Rezirkulationseinheit 40 ist ferner eine Vorrichtung 20 zur elektrostatischen Voragglomeration angeordnet, wobei die Sprühelektrode 22 durch Absaugeinheit 30 und Rezirkulationseinheit 40 hindurch reicht. Als optionale Baugruppe ist die Vorrichtung 20 zur elektrostatischen Voragglomeration vorgesehen, umfassend mindestens eine Hochspannungsquelle 26, eine Sprühelektrode 22, um welche sich Hochspannungsfeld im zu reinigenden Gasstrom ausbildet, und einen Isolator 24, welcher ein Überschlagen der Hochspannung auf die umgebenden Bauteile wie die Absaugeinheit 30 und den ursprünglichen Rauchgasweg verhindert. Die Hochspannungsquelle 26 ist über entsprechend geeignete Hochspannungskabel 28 mit dem Isolator 24 und der Sprühelektrode 22 verbunden. Zusätzlich kann ein in Fig. 11 dargestelltes geerdetes Niederschlagsgitter 29 anströmseitig vor dem Filterelement angeordnet werden, um den Effekt der Standzeiterhöhung durch Voragglomeration zu verstärken.

Eine solche für Kleinfeuerungsanlagen bisher nicht verfolgte Lösung der Staubabscheidung realisiert eine Kombination aus Komponenten der elektrostatischen Staubabscheidung bzw. elektrostatischer Voragglomeration und der Filtration. Die Feinstaubpartikel werden hierbei zunächst einem elektrostatischen Feld ausgesetzt, welches schwächer ist als die üblicherweise zur reinen elektrostatischen Feinstaubabscheidung verwendeten elektrostatischen Felder. In diesem abgeschwächten elektrostatischen Feld erfolgt eine Voragglomeration von vielen sehr kleinen Feinstaubpartikeln zu größeren Agglomeraten. Diese größeren Agglomerate können in der nachfolgenden Filtrationsstufe in der Filtereinheit 60 erheblich leichter abgeschieden werden als kleine Feinstaubpartikel. Dies führt neben einer verbesserten Reinigungsleistung auch zu einem deutlichen Anstieg der Standzeiten der verwendeten Filtermaterialien, da die großen Agglomerate eher anströmseitig einen porösen Staubbelag bilden als in die Tiefe des Filtermaterials 50 einzudringen und damit zu einem Anstieg des Druckverlustes beim Betrieb führen. Da die Herstellungskosten für den Hochspannungserzeuger 26 zur Erzeugung des abgeschwächten elektrostatischen Feldes gering sind, kann durch die elektrostatische Voragglomeration ein gutes Preis-Leistungs-Verhältnis erzielt werden. Die elektrostatische Voragglomeration dient dazu, die Standzeiten der Filtermaterialien zu erhöhen.

In Fig. 4 sind gemäß einem weiteren Ausführungsbeispiel die Absaugeinheit 30 und die Rezirkulationseinheit 40 innerhalb eines Abgasrohres bzw. Rauchrohres 12 montiert, beispielsweise innerhalb eines isolierten Edelstahlkamins zur nachträglichen Montage an der Außenseite von Häusern. Erneut sind die jeweiligen Gasströme während des Betriebs der Vorrichtung dargestellt, wobei der Übersichtlichkeit halber auf eine Darstellung der ohnehin optional vorgesehenen Vorrichtung 20 zur elektrostatischen Vorabscheidung verzichtet wurde.

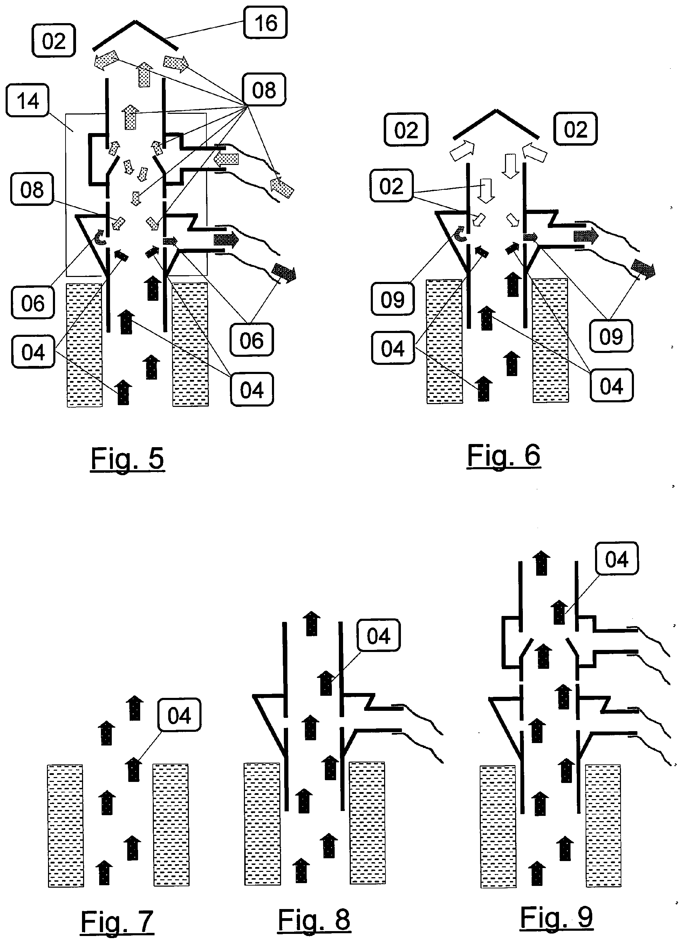

Fig. 5 zeigt eine Darstellung der Gasströme innerhalb einer Absaugeinheit 30 und einer Rezirkulationseinheit 40 während des Betriebes der Vorrichtung. Es ist insbesondere erkennbar bzw. dargestellt, dass die Mischung eines Rauchgases 4 mit rezirkuliertem Reingas 8 zu einem verdünnten Rohgas 6 führt.

Fig. 6 betrifft eine Darstellung der Gasströme innerhalb einer Absaugeinheit 30 ohne die Rezirkulationseinheit 40. Es ist erkennbar, dass die Mischung eines Rauchgases 4 mit Falschluft 2 zu einem verdünnten Rohgas 9 führt.

In Fig. 7 ist aus einem Kamin ohne Absaugeinheit 30 und ohne Rezirkulationseinheit 40 in Atmosphäre austretendes Rauchgas 4 dargestellt, welches einen hohen Feinstaubgehalt von beispielsweise 100 mg/m³_{N} aufweist.

Fig. 8 zeigt wie ein Rauchgasstrom 4 an einem Kamin 10 mit Absaugeinheit 30 bei einer Betriebsstörung der Filtereinheit 60, beispielsweise bei Stromausfall oder Wartungsmangel an den Filtern, in die Atmosphäre austritt, da keine Ansaugen des Rauchgasstroms 4 durch die Filtereinheit 60 erfolgt.

Fig. 9 betrifft eine weitere Darstellung, in welcher ein Rauchgasstrom 4 an einem Kamin 10 mit Absaugeinheit 30 und mit Rezirkulationseinheit 40 bei Betriebsstörung der Filtereinheit 60 in Atmosphäre austritt.

In Fig. 10 ist ein Ausführungsbeispiel einer Filtereinheit 60 dargestellt, welche ein Filterelement 50, ein Gehäuse 62, einen Wartungsdeckel 64, einen Rohgaseintritt 66, einen Reingasaustritt 68, einen Lüfter 65 sowie beispielsweise als thermisch isolierter Metallschlauch ausgeführte Verbindungselemente 38 und 48 für Roh- und Reingas umfasst.

Die Filterelemente 50 der Filtereinheit 60 sind vorzugsweise als sogenannte Taschenfilter ausgebildet. Die Ausführung als Taschenfilter stellt eine einfache, kostengünstige und beispielsweise in der Lüftungstechnik betriebsbewährte Konstruktion dar. Ein wesentliches Merkmal von Taschenfiltern ist, dass sie häufig nach dem Prinzip der Tiefenfiltration funktionieren und im Gegensatz zu Oberflächenfiltern häufig als nicht regenerierbar angesehen und auch so in der entsprechenden Fachliteratur beschrieben werden. Bei der Abscheidung von Feinstäuben aus Feuerungsabgasen hat sich jedoch überraschend herausgestellt, dass die Taschenfilter, beispielsweise gegen Ende ihrer Standzeit wenn der Druckverlust über das Filtermedium so groß geworden ist, dass eine vollständige Absaugung der von der Feuerung herkommenden Rauchgasmenge nicht mehr gewährleistet ist, durch einfache mechanische Bewegung, wie Klopfen, Vibration oder Schütteln, so weit regeneriert werden können, dass der zuvor sehr hohe Druckverlust stark verringert wird. Auch andere Arten der Abreinigung, bei denen das Filtermedium im eingebauten Zustand regeneriert wird sind erfindungsgemäß, wie beispielsweise pneumatische Abreinigung durch Druckstoß (sog. "Jet-Pulse-Abreinigung). Hierin auch beschrieben (nicht gemäß der Erfindung) ist eine Abreinigung durch Strömungsumkehr ("Rückspülen"). Tiefenfilter, auch Speicherfilter genannt, werden unter anderem bei geringeren Volumenströmen und vergleichsweise geringer Staub-/Verschmutzungsfracht eingesetzt, insbesondere dann, wenn der abgeschiedene Staub nicht als Wertstoff zurückgewonnen werden soll, da sie den Staub etc. in der Tiefe des Filtermaterials einlagern, so dass dieser nicht, bzw. nur im geringen Umfang, wieder abgegeben werden kann [vgl.: Löffler, Friedrich: Staubabscheiden, Zeitschrift / Reihe: Lehrbuchreihe Chemieingenieurwesen/ Verfahrenstechnik, Thieme-Verlag, Stuttgart, 1988, ISBN: 3137122015].

Ein in der Fachliteratur beschriebenes und gängiges Verfahren um Filtermaterialien vor der schnellen Alterung durch nasse und/oder klebrige Partikel und Aerosole zu schützen ist die sog. Precoatierung, auch Filterhilfsschicht genannt. Hierbei wird ein trockenes Pulver, beispielsweise Kalk, fein verteilt anströmseitig als Schutzschicht auf die Filtermedien aufgebracht, so dass die feuchte oder klebrigen Partikel und Aerosole keinen direkten Kontakt zu Filtermaterial bekommen. Bei der Abreinigung des Filtermaterials löst sich beispielsweise die Kalkschicht einfach vom Filtermaterial und somit erfolgt auch eine Abreinigung der feuchten und klebrigen Schmutzfracht.

Im Gegensatz zu den Tiefenfiltern werden Oberflächenfilter bei großen Staub- /Verschmutzungsfrachten und großen Volumenströmen eingesetzt, insbesondere dann, wenn der abgeschiedene Staub als Wertstoff zurückgewonnen werden soll. Bei Oberflächenfiltern findet die Abscheidung an der Filteroberfläche statt, so dass beispielsweise durch Strömungsumkehr der an der Oberfläche abgeschiedene Staub abgeworfen werden kann.

Bei der Reinigung der Abgase von Feststoff-Kleinfeuerungsanlagen sind die Volumenströme vergleichsweise gering (bei Einzelraumfeuerungen deutlich unter 100 m³_{N}/h), wobei die Staubgehalte um 100 mg/m³_{N} liegen und damit im Vergleich zu vielen industriellen Anwendungen ebenfalls gering sind. Der abgeschiedene Staub soll dabei nicht als Wertstoff zurückgewonnen werden. Damit erfüllen Tiefenfilter die Anforderungen der erfindungsgemäßen Aufgabe. Entscheidend für den praxisrelevanten Einsatz von Taschen-Tiefenfiltern zur Reinigung des Abgases von Feststoff-Kleinfeuerungsanlagen ist eine ausreichende Standzeit der Filterelemente. Idealerweise beträgt die Standzeit der Filterelemente ein Jahr, so dass der Wechsel der Filterelemente beispielsweise durch einen Schornsteinfeger bei jährlicher Reinigung auch außerhalb der Heizperiode erfolgen kann.

Typische marktgängige Größen von Taschenfilterelementen der Lüftungstechnik, die auch für die Reinigung des Abgases von Feststoff-Kleinfeuerungsanlagen eingesetzt werden könnten, sind Rahmenmaße von 598 mm x 598 mm mit sechs bis zehn Taschen und einer Taschentiefe zwischen 360 mm und 600 mm. Ein solches Filterelement mit sechs Taschen und 500 mm Taschentiefe hat eine Filterfläche von etwa 3,6 m² (0,598m x 0,5m x 6 Taschen x 2 Seiten pro Tasche = 3,6 m²).

Fig. 11 zeigt gemäß einem weiteren Ausführungsbeispiel eine Filtereinheit 60 mit einer Seitenkammer 67, welche für die Gasführung und/oder die wettergeschützte Unterbringung eines Lüfters 65 und/oder einer Steuerungseinheit vorgesehen ist. Ferner ist eine Bodenmatte 63 vorgesehen, welche zur Aufnahme von Kondensat während der kalten Anfahrphasen und zur späteren Verdampfung bei zunehmender Betriebstemperatur dient und beispielsweise als Mineralwollmatte ausgeführt ist. Mindestens ein im Bodenbereich installierter Feuchtesensor 61 dient der zusätzlichen Sicherheit gegen übermäßige Ansammlungen von Kondensat. Wird ein unzulässig hoher Kondensatstand detektiert, kann eine Warnmeldung an den Betreiber oder den Schornsteinfeger erfolgen, beispielsweise über eine Mobilfunknetzverbindung oder dergleichen, und es kann der Ventilator außer Betrieb genommen werden um einen weiteren Eintrag von Kondensat zu verhindern. Alternativ und/oder ergänzend kann Kondensat über einen Drainageanschluss 63a (vgl. Fig. 11a) abgeleitet werden und beispielsweise in Drainagebeutel aufgefangen werden.

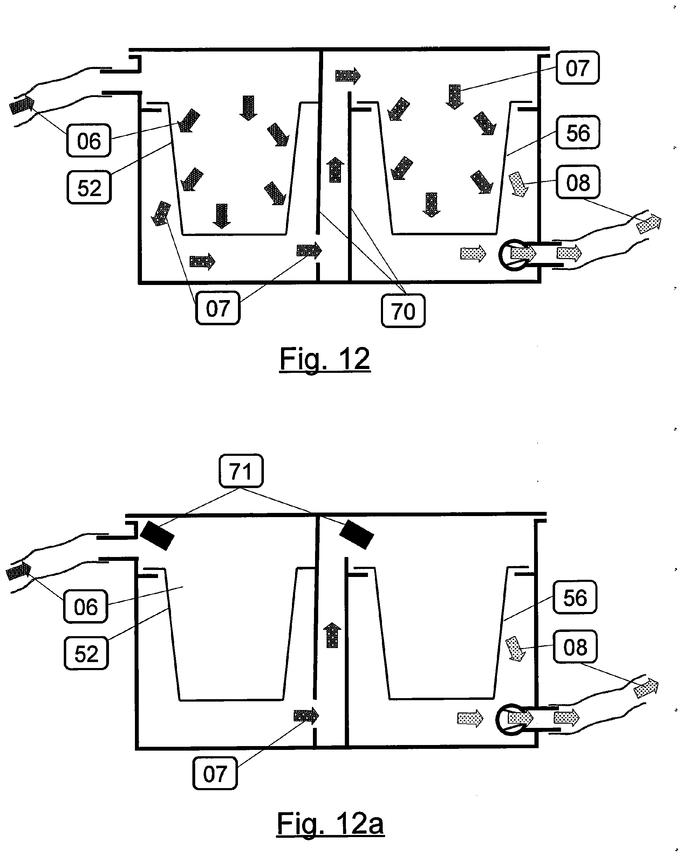

Fig. 12 zeigt ein weiteres Ausführungsbeispiel einer Filtereinheit 60 mit zwei in Reihe geschalteten Filtern, nämlich einem Vorfilter 52 und einem Feinfilter 56, sowie zwei zwischen Vorfilter 52 und Feinfilter 56 angeordneten Trennwänden 70. Das Vorfilter 52 reinigt ein mit rezirkuliertem Reingas verdünntes Rohgas 6, beispielsweise mit einem Feinstaubgehalt von 85 mg/m³_{N}. Daraus resultiert ein vorgereinigtes Rohgas 7 mit einem Feinstaubgehalt von beispielsweise 50 mg/m³_{N}. Nach Filterung durch das Feinfilter 56 wird ein Reingas 8 gewonnen, welches einen Feinstaubgehalt von beispielsweise 10 mg/m³_{N} aufweist. Dadurch wird eine erhöhte Abscheideleistung und eine Erhöhung der Standzeit der Tiefenfilter erreicht. Vorfilter fungieren zur Abscheidung der eher groben Verschmutzungsfracht, wobei Feinfilter hingegen der Reinigung auf die gewünschte Reinheit des Abgases dienen. Als in der Praxis vorteilhaft haben sich hierbei gemäß EN 779 (2012) die Filterklassen G4, M5 sowie M6 als Vorfilter und F7 bzw. F8 als Feinfilter erwiesen.

Fig. 12a zeigt ein weiteres Ausführungsbeispiel einer Filtereinheit 60, ähnlich Fig. 12, mit zwei in Reihe geschalteten Filtern, nämlich einem Vorfilter 52 und einem Feinfilter 56, jedoch mit mindestens einer anströmseitig vom Filter angebrachten Einbringung von Precoatmaterial 71. Es kann auch nur eine Einbringung von Precoatmaterial anströmseitig von Vorfilter 52 installiert sein. Eine Ergänzung um eine anströmseitig vom Feinfilter 56 angebrachte weitere Einbringung von Precoatmaterial ist möglich.

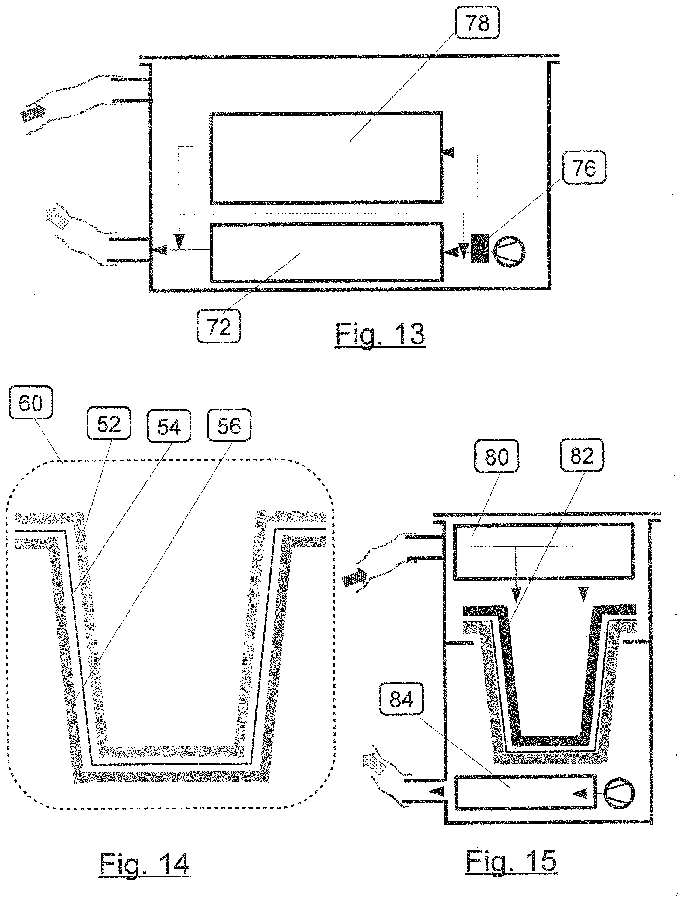

In Fig. 13 ist eine Filtereinheit 60 mit einem nachgeschalteten Schalldämpfer 72, einem Zusatzfilter 78 und einer Umschalteinheit 76 dargestellt. Das Zusatzfilter 78 dient einem Betrieb mit frischen bzw. neu eingesetzten Filterelementen 50, um von diesen nicht herausgefilterte Feinstaubanteile herausfiltern zu können. Bei frischen Tiefenfiltern ist die Abscheideleistung anfangs geringer, steigt aber nach einiger Betriebszeit deutlich an. Das Zusatzfilter 78 dient daher insbesondere zur Überbrückung einer kurzzeitig geringeren Abscheidung während einer solchen Einfahrphase. Die Umschalteinheit 76 leitet ein Gas am Ausgang des Lüfters in Richtung Schalldämpfer 72 oder Zusatzfilter 78. Dabei kann die Verschaltung von Zusatzfilter 78 und Schalldämpfer 72 sowohl parallel, wie in Fig. 13 dargestellt, als auch in Reihe erfolgen.

Fig. 14 zeigt ein Ausführungsbeispiel eines mehrschichtigen Feinstaubfilters 50 mit einem Vorfilter 52, einer Trennschicht 54 und einem Feinfilter 56. Die Trennschicht 54 verhindert ein "Verkleben" der beiden angrenzenden Filterschichten und ist beispielsweise als grobfaserige Matte ausgeführt. Entsprechend dieser Variante der Reihenschaltung sind das Vorfiltermaterial 52 und das Feinfiltermaterial 56 in einem Filterelement 50 verbaut. Der Vorteil dieser Ausführung besteht in der kompakteren Bauweise, die insbesondere zu kleineren Gehäusen der Filtereinheit führt. Bei dieser Bauart der Filterelemente ist eine Trennschicht 54 zwischen dem Vorfilter 52 und dem Feinfilter 56 erforderlich, da es anderenfalls zu Verklebungen und Verblockungen durch die abgeschiedene Verschmutzungsfracht an der Grenzschicht von Vorfilter 52 und Feinfilter 56 kommen kann. Insbesondere die dem Vorfilter 52 zugewandte Anströmseite des Feinfilters 56 neigt zu diesen Verklebungen und Verblockungen. Diese Trennschicht kann aus einem im Vergleich zu den beiden angrenzenden Filtermaterialien grobporigen Material bestehen. Dies kann beispielsweise ein Grobfiltermaterial der Filterklassen G3 oder G4 sein. Eine weitere, nicht dargestellte Alternative ist eine metallische Ausführung aus mindestens zwei Schichten von Maschendraht, die einen weiteren Abstandshalter, wie beispielsweise eine Struktur aus Draht mit einem im Vergleich zum äußeren Maschendraht dickeren Durchmesser, zwischen sich aufweisen können. Diese metallische Abstandshaltervariante kann, bei geeigneter Ausführung, auch eine stützende Funktion übernehmen und so insbesondere zusätzliche Formgebungselemente 58 ersetzen.

Fig. 15 zeigt eine integrierte Filtereinheit, beispielsweise für Kohlefeuerungen, mit einer zusätzlichen Vorrichtung zur Entschwefelung. Beispielsweise bei Restaurants, die unter anderem Fleisch über Holzkohle grillen, kommt es, vor allem in Ballungsgebieten, verstärkt zu Nachbarschaftsbeschwerden wegen der Geruchsemissionen. Für diese Anwendungen kommt eine Geruchsminderung bzw. Geruchsabscheidung in Betracht.

Gemäß einer ersten Variante ist eine dem Feinstaubfilter vorgeschaltete Entschwefelungs-/Geruchsminderungsvorrichtung 80 vorgesehen, beispielsweise ausgeführt als Festbett aus Kalk. Gemäß einer zweiten Variante ist eine in die Filtereinheit integrierte Entschwefelungs-/Geruchsminderungsvorrichtung 82 vorgesehen, beispielsweise ausgeführt als Kalkschicht. Gemäß einer dritten Variante ist eine der Filtereinheit nachgeschaltete Entschwefelungs-/Geruchsminderungsvorrichtung 84 vorgesehen, beispielsweise ausgeführt als Festbett aus Kalk bzw. Aktivkohle. Das Festbett kann beispielsweise aus Calciumhydroxid (gelöschtem Kalk, Ca(OH)₂) sein, wenn das Rauchgas entschwefelt werden soll und aus Aktivkohle, wenn Gerüche abgeschieden werden sollen.

Alternativ kann eine separate Geruchsabscheidungseinheit 28 auch als beispielsweise in Form von Kassetten oder Patronen ausgeführte Aktivkohleschicht mit optional vorgeschaltetem Drahtgestrickfilter als Fettfang und optional dem vorgeschalteten Wirbelstromfilter als Brandschutz ausgeführt sein.

In Kleinkohlefeuerungen wird überwiegend Braunkohle eingesetzt, deren Schwefelgehalt als Mittelwert von rheinischer und Lausitzer Braunkohle abgeschätzt werden kann. Bei einem jährlichen Durchsatz von zwei Tonnen Braunkohle und einem emissionsrelevanten Anteil von 0,225 % entspricht dies Emissionen von 4,5 kg/a reinem Schwefel bzw. 9 kg SO₂. Zur Abscheidung von einem Molekül SO₂ wird ein Molekül Ca(OH)₂ benötigt, aus welchem sich letztlich Gips (CaSO₄) bildet. Aufgrund der molaren Massen von SO₂ mit 64 g/mol und Ca(OH)₂ von 74 g/mol ergibt sich ein jährlicher Bedarf von 10,5 kg Ca(OH)₂ pro Jahr. Da diese Abschätzung zunächst auf der Annahme idealer Reaktionsbedingungen, d.h. einem Stöchiometriefaktor von 1,0 ausgeht, wird der reale Bedarf mit 10 bis 40 kg Ca(OH)₂ und im Mittel mit 25 kg Ca(OH)₂ pro Jahr abgeschätzt. Diese Menge an Ca(OH)₂ kann sowohl in Festbetten vor und nach dem Filtermaterial in den Rauchgasstrom eingebracht werden. Ferner ist denkbar, dies als Schicht anströmseitig auf dem Filtermaterial zur Staubabscheidung, zwischen den Filtermaterialien zur Vor- und Feinreinigung oder abströmseitig nach dem Filtermaterial zur Feinreinigung des Staubes einzusetzen. Bei einer Schüttdichte von etwa 400 kg/m³ für Ca(OH)₂ ergibt sich unter der Annahme einer Filterfläche zur Staubabscheidung von 5 m² eine Schichtdicke von 1,25 cm Stärke. Diese Schichtdicke liegt in der Größenordnung von den Tiefenfiltermaterialien zur Vor- und Feinabscheidung.

Bevorzugt findet die Entschwefelung mit Ca(OH)₂ im Temperaturbereich um 140 °C statt. Diese höheren Temperaturen liegen eher im Bereich des Rohgaseintritts 66 des Filters 60 vor. Gleichzeitig soll die Ca(OH)₂ Schicht vor einem zu hohen Staubeintritt geschützt werden, der anderenfalls den Druckverlust während der Durchströmung erhöhen würde. Die am meisten bevorzugte Stelle des Einsatzes der Ca(OH)₂-Schicht ist daher abströmseitig als Zusatzschicht auf den Filterelementen 50 nach der Feinabscheidung des Staubes. Bevorzugt kann die Entschwefelungsschicht zwischen den Filtermaterialien für Vor- und Feinabscheidung des Staubes installiert werden. Denkbar ist auch eine Installation als Festbett vor den Filterelementen im Rohgasbereich des Filtergehäuses oder aber als Festbett nach den Filterelementen im Reingasbereich des Filtergehäuses. Anstelle von Kalk, der für die Entschwefelung in den Gasreinigungseinheiten 80, 82, 84 eingesetzt wird, können die Gasreinigungseinheiten 80, 82, 84 auch mit geruchsmindernden Stoffen wie beispielsweise Aktivkohle ausgerüstet werden.

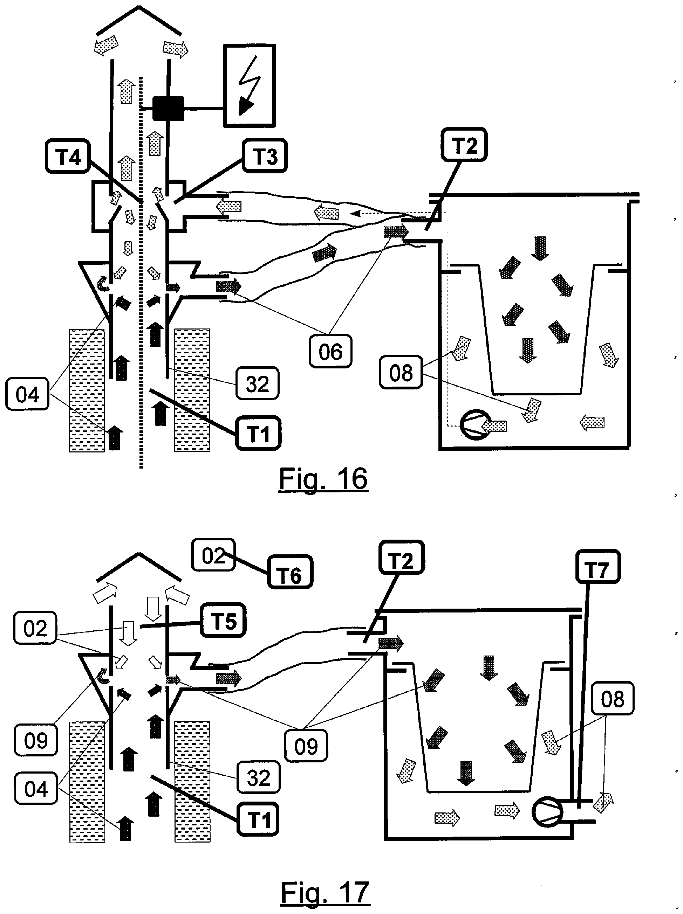

In Fig. 16 und Fig. 17 sind Ausführungsbeispiele der Funktionsweise einer Temperatursteuerung des Feinstaubfilters mit und ohne Rezirkulationseinheit dargestellt. Da keine Rauchgasklappen oder sonstigen Drosselorgane vorhanden sind, erfolgt die Steuerung ausschließlich über eine Beeinflussung der Drehzahl des Ventilators. Eine Erhöhung der Ventilatordrehzahl führt ebenso zu einer verbesserten Absaugung der Rauchgase, die von unten von der Feuerung her zur Absaugeinheit kommen, wie auch zu einer Erhöhung des Falschgasanteils, der von oben zur Absaugeinheit gelangt. Da die freien Strömungsquerschnitte oberhalb und unterhalb der Absaugstelle gleich groß sind, führt der in der Absaugstelle anliegende Unterdruck dazu, dass die Anteile der von oben bzw. von unten angesaugten Gase in etwa gleich groß sind. Ein zu hoher Falschgasanteil sollte möglichst vermieden werden um die Filterflächenbelastung gering zu halten und die Gefahr des Kondensatanfalls durch Taupunktunterschreitung durch zu hohe Anteile von kalter Falschluft, insbesondere wenn keine Rezirkulationseinheit installiert ist, zu minimieren.

Die erforderliche Ventilatordrehzahl bzw. der erforderliche Unterdruck verändert sich während des Betriebs laufend, insbesondere da die Rauchgasmenge und - temperatur über die Abbrandphasen des Brennstoffs veränderlich ist und der Druckverlust des Filters aufgrund der Filterbeladung mit zunehmender Betriebszeit zunimmt.

Die Ventilatordrehzahl soll damit ausreichend hoch sein, um alles von der Feuerung kommende Rauchgas sicher zu erfassen. Auf der anderen Seite soll die Ventilatordrehzahl nicht zu hoch sein um ein Auskühlen durch zu hohen Falschlufteintrag auszuschließen.

Die Steuerungen der beiden in Fig. 16 und 17 dargestellten Varianten mit und ohne Rezirkulationseinheit weisen die folgenden Gemeinsamkeiten auf:
- Die untere Kamintemperatur-Messstelle T1 erkennt den Beginn und das Ende des Betriebs der Feuerung und schaltet die Ventilatorsteuerung ein bzw. aus, beispielsweise bei Temperaturen von größer 40 °C.
- Die Filtereintrittstemperatur-Messstelle T2 schaltet bei Überschreitung der maximal zulässigen Betriebstemperatur der Filterelemente den Ventilator ab, um eine thermische Schädigung des Filtermaterials zu verhindern. Die Abschaltung des Ventilators führt zu einer Ableitung der ungefilterten heißen Rauchgas an die Atmosphäre, beispielsweise bei Temperaturen von größer 160 °C.

Die Steuerung des Feinstaubfilters mit Rezirkulationseinheit erkennt eine zu geringe Absaugung vorteilhafterweise daran, dass ein Durchbruch von wärmerem Rauchgas vorliegt, der über die Messstelle T4 im Kernstrom der Verlängerung des ursprünglichen Abgasweges gemessen wird. Diese Temperatur wird mit der des rezirkulierten Reingases verglichen, dass im Rezirkulationsraum durch die Messstelle T3 gemessen wird. Wenn die Differenz von T4 und T3 größer als ein Schwellwert ist, erkennt die Steuerung einen Durchbruch von wärmerem Rauchgas und regelt den Ventilator hoch.

Der Ventilator wird von der Steuerung herunter geregelt, wenn die Temperatur des rezirkulierten Reingases T3 durch zu hohen Falschluftanteil zu gering ist und die Gefahr einer Taupunktunterschreitung besteht. Hierzu wird T3 mit einem Festwert Tₘᵢₙ zur Taupunkterkennung verglichen. Ein weiterer Abgleich erfolgt zwischen T3 (rezirkuliertes Reingas), T1 (Rohgastemperatur im Kamin) und T2 (abgesaugtes Rohgas) um das Verhältnis der Temperaturen von Rohgas zum rezirkulierten Reingas zu bewerten.

Die Steuerung des Feinstaubfilters ohne Rezirkulationseinheit erkennt eine zu geringe Absaugung vorteilhafterweise daran, dass ein Durchbruch von wärmerem Rauchgas vorliegt, der über die Differenz der Gastemperatur kurz vor Austritt in die Atmosphäre T5 und der Umgebungstemperatur T6 erkannt wird. Solange T5 etwa im Bereich von T6 liegt kann ein Rauchgasdurchbruch ausgeschlossen werden. Ab der Überschreitung eines Schwellwertes der Differenz von T5 minus T6 wird der Ventilator hochgeregelt, um den Unterdruck in der Absaugstelle so zu steigern, dass das Rauchgas vollständig erfasst und der Filtereinheit zugeleitet wird.

Analog zur Variante mit Rezirkulationsschaltung wird der Ventilator aufgrund von zu geringen Reingastemperaturen T7 herunter geregelt. Hierzu wird T7 mit dem Minimalwert aufgrund einer Taupunktunterschreitung Tₘᵢₙ ebenso verglichen wie mit der Temperatur des Rohgases T1.

In beiden Varianten - mit und ohne Rezirkulationseinheit - stellt sich die Ventilatordrehzahl vorteilhafterweise als dynamisches Gleichgewicht zwischen den vorgenannten Randbedingungen "Verhinderung von Rauchgasdurchbruch" und "Verhinderung von Taupunktunterschreitung" ein. Dieses dynamische Gleichgewicht passt sich vorteilhafterweise den über die Abbrandphasen der Feuerung veränderlichen Rauchgasmengen und -temperaturen ebenso an wie an wie an den mit der Zeit zunehmenden Differenzdruck über das Filtermedium.

Ein vollständig beladenes Filtermedium wird von der Steuerung dadurch erkannt, dass bei maximaler Drehzahl des Ventilators nicht alles Rauchgas erfasst wird. Bereits im Vorfeld kann die zunehmende Filterbeladung vorteilhafterweise über steigende Drehzahlen während der Abbrandphase erkannt werden. Diese Daten können von der Steuerung dem Betreiber oder Schornsteinfeger, etwa aufs Mobiltelefon, gesendet werden, so dass ein vorzeitiger Wartungsbedarf sicher erkannt werden kann. Auf der anderen Seite kann hierdurch beispielsweise auch erkannt werden, dass die Filterelemente eine weitere Heizperiode ohne Austausch genutzt werden können.

Neben dieser Datenübermittlung kann auch die Steuerung vorteilhafterweise fernparametriert werden, in dem veränderte Schwellwerte für das Hoch- und Runterregeln der Ventilatordrehzahl beispielsweise per Mobiltelefon an die Steuerung geschickt werden.

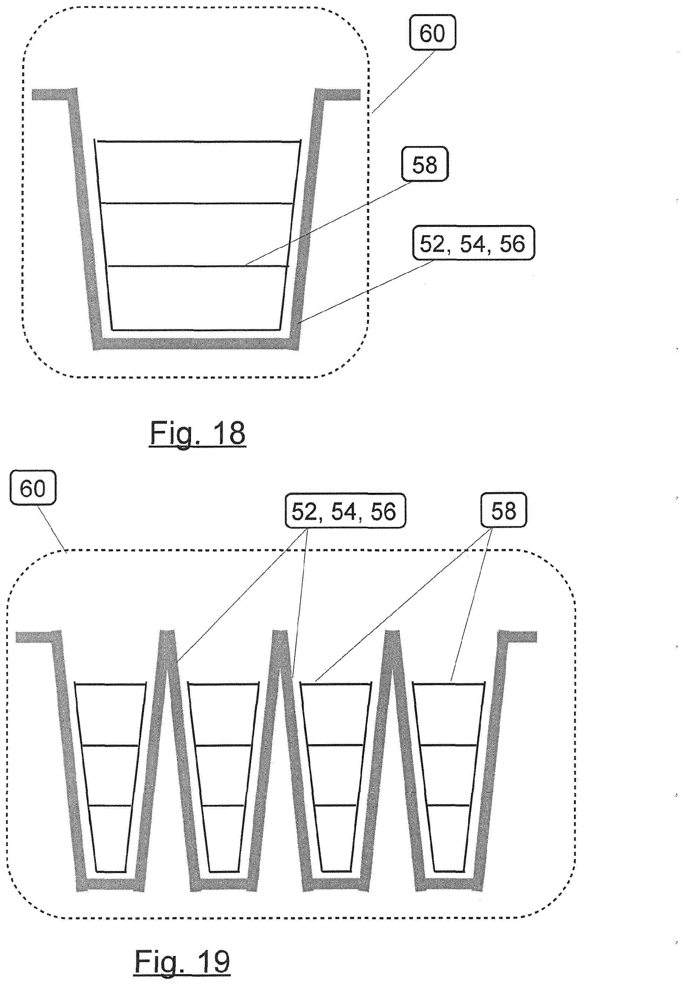

Fig. 18 zeigt ein erstes Ausführungsbeispiel eines Formgebungselements 58 im Inneren der Filtertaschen in einer Filtereinheit 60. Dargestellt ist ein Längsschnitt durch eine Filtertasche. Bei der Verwendung von Taschen-Tiefenfiltern für die Reinigung eines Abgases von Feststoff-Kleinfeuerungsanlagen ist der Volumenstrom mit weniger als 100 m³_{N}/h im Gegensatz zum sonst üblichen Einsatz dieser Filterelemente in der Lüftungstechnik mit mehreren 1.000 m³_{N}/h deutlich geringer. Dadurch besteht die Gefahr, dass die Filterelemente aufgrund des geringen Volumenstroms nicht durch die Gasströmung aufgestellt werden bzw. aufgestellt bleiben und zusammenfallen, so dass nicht die gesamte Filterfläche des Taschenfilters genutzt wird. Es kann dieses Zusammenfallen durch den Einsatz von festen Formgebungselementen 58 verhindert werden. Hierzu dienen beispielsweise Drahtkörper, welche im Inneren der Filterelemente bzw. -taschen 50 angeordnet werden oder - in Fig. 18 nicht dargestellte, feste Trennschichten 54, beispielsweise metallische Trennschichten 54, zwischen dem Vor- und dem Feinfilter.

Fig. 19 zeigt ein zweites Ausführungsbeispiel, welches mehrere Formgebungselemente 58 zeigt, die im inneren mehrerer Filtertaschen in einer Filtereinheit 60 angeordnet sind. Dargestellt ist ein Querschnitt durch mehrere nebeneinander befindliche Filtertaschen eines Filterelements 50, bestehend aus Vorfilter 52, Trennschicht 54 und Feinfilter 56.

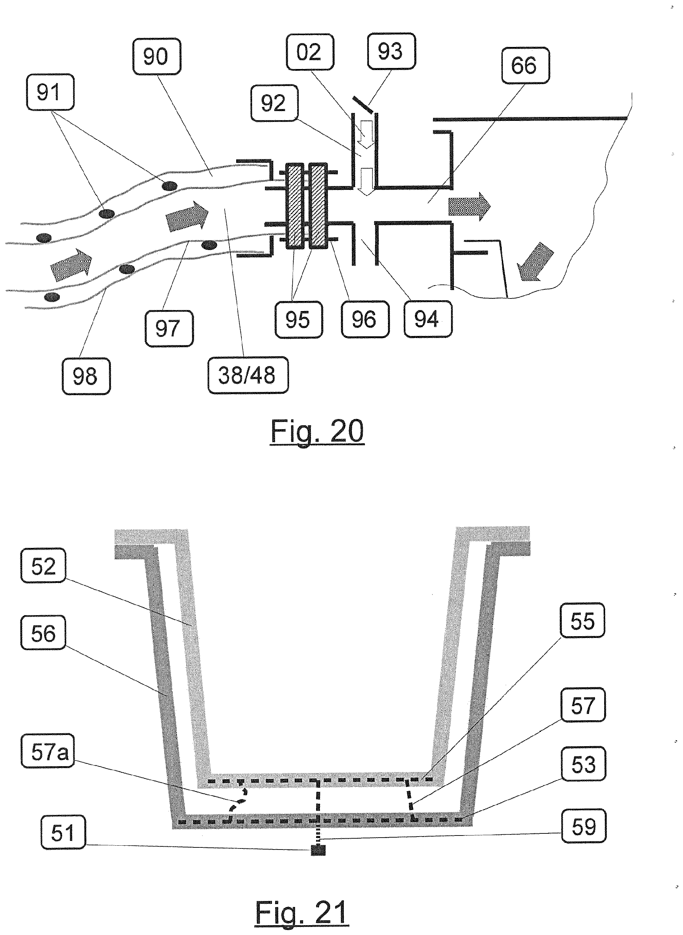

Fig. 20 zeigt ein Ausführungsbeispiel zur Erweiterung des Temperatureinsatzbereiches der erfindungsgemäßen Vorrichtung. Bei Einsatzorten mit sehr geringer Rauchgastemperatur an der Absaugstelle bestünde, auch beim Einsatz von Rezirkulationsschaltungen, mitunter die Gefahr von häufiger Taupunktunterschreitung, welche einen Einsatz der erfindungsgemäßen Vorrichtung mitunter einschränken könnte. Durch eine zusätzliche Aufheizung des Rauchgases, etwa um 10 bis 50 Kelvin, kann die erfindungsgemäße Vorrichtung vorteilhafterweise auch an solchen Standorten mit sehr geringer Rauchgastemperatur eingesetzt werden, die anderenfalls nicht möglich wären. Der Energiebedarf für die Zuheizung liegt im Bereich von wenigen hundert Watt und ist damit erheblich kleiner als die Feuerungsleistung der Kleinfeuerungsanlage, die bei Einzelraumfeuerungen im Bereich zwischen 4.000 und 8.000 Watt liegt und damit um eine Größenordnung höher ist.

Ein beispielhaft als flexibler Innenschlauch 97 ausgeführtes Verbindungselement 38 und/oder 48 ist zur Minderung des Wärmeverlustes vorteilhafterweise mit einer Isolierung 90 versehen. Als Wetterschutz der Isolierung dient vorteilhafterweise ein flexibler Außenschlauch 98. Über elektrische Heizelemente 91, die auf dem Innenschlauch angebracht sind, kann eine Zusatzbeheizung erfolgen, durch die die Rauchgastemperatur innerhalb des Innenschlauchs 97 erhöht werden kann, so dass dieses Rauchgas in erwärmter Form über den Rohgasstutzen 66 in die Filtereinheit eintritt. Alternativ kann die Erwärmung des Rauchgases auch über den Stutzen 94 durch den Zustrom von Heißluft, beispielsweise aus einem Heißluftgebläse, oder den Zustrom von Heißgas, beispielsweise Verbrennungsabgas einer Gaszufeuerung oder einer Ölzufeuerung, erfolgen, wodurch das Rauchgas nachgeheizt wird.

Fig. 20 zeigt ferner eine bevorzugte und einfache Art der Befestigung des Verbindungselementes 38 bzw. 48 an der Filtereinheit. Der Innenschlauch 97 wird dazu über eine Verlängerung des Rohgaseintrittsstutzens 66 gestülpt und mittels Spannschellen 95 befestigt. Zum Schutz gegen das Einschneiden der Spannschellen wird vorteilhafterweise eine Unterlage für Spannschellen als Schlauchschutz 96 verwendet, beispielsweise ausgeführt als dünnes Metallblech in offener überlappender Ausführung, das um den Innenschlauch gewickelt ist und sich beim Anziehen der Spannschellen selbst um den Innenschlauch zuzieht. Vorteilhafterweise ist hier eine zusätzliche Dichtung, beispielhaft ausgeführt als um den Rohgasstutzen gewickelte Matte aus Hochtemperatursilikon, zwischen Rohgasstutzen 66 und Innenschlauch 97 vorgesehen (nicht bildlich dargestellt). Diese Art der Befestigung der Verbindungselemente zählt ebenso wie beispielsweise die Kamlockkupplung zu den Schnellverschlusssystemen.

Ebenso ist ein Einsatz der vorliegenden Erfindung an Standorten mit sehr hohen Rauchgastemperaturen möglich, in dem das abgesaugte Rauchgas über Falschluft 02 so stark gekühlt wird, dass die maximale Betriebstemperatur der Filterelemente eingehalten werden kann.

Dies kann beispielsweise der Fall sein, wenn der Absaugpunkt nahe der Feuerung liegt und isolierte Rauchgasrohre eingesetzt werden, wie bei der nachträglichen Montage von isolierten Edelstahlkaminrohren an der Außenseite von Gebäuden, insbesondere dann, wenn das Filter in Höhe der Erdgleiche, beispielsweise im Garten, gemäß Fig. 4 eingebunden wird.

Der Falschlufteintrag erfolgt vorteilhafterweise über den Stutzen 92 und kann über ein Regelorgan 93 für Falschluft geregelt werden. Der Anspruch von drosselfreien Rauchgaswegen trifft nach wie vor zu, da dieses Drosselorgan lediglich die Falschluftzufuhr regelt. Aufgrund einer Störung des Regelorgans 93 kann vorteilhafterweise kein gefährlicher Rückstau von Rauchgas erfolgen.

Fig. 21 zeigt ein Filterelement im Längsschnitt, welches durch mechanische Bewegung, beispielsweise über eine Abreinigungsstange 51, abgereinigt werden kann. Eine Bewegung der Stange 51 wird über Verbindungselemente 59 auf eine im Boden des unteren Feinfilters 56 befindliche Längsstange 53 übertragen, welche wiederum über weitere feste oder flexible Verbindungselemente 57, 57a die Bewegung an den Boden des Grobfilters 52 überträgt. Der an der anströmseitigen inneren Oberfläche abgeschiedene Staub fällt zu großen Anteilen nach unten und reduziert somit den Druckverlust bei der Durchströmung des Filtermaterials und erhöht damit vorteilhafterweise die Standzeit des Filterelements.

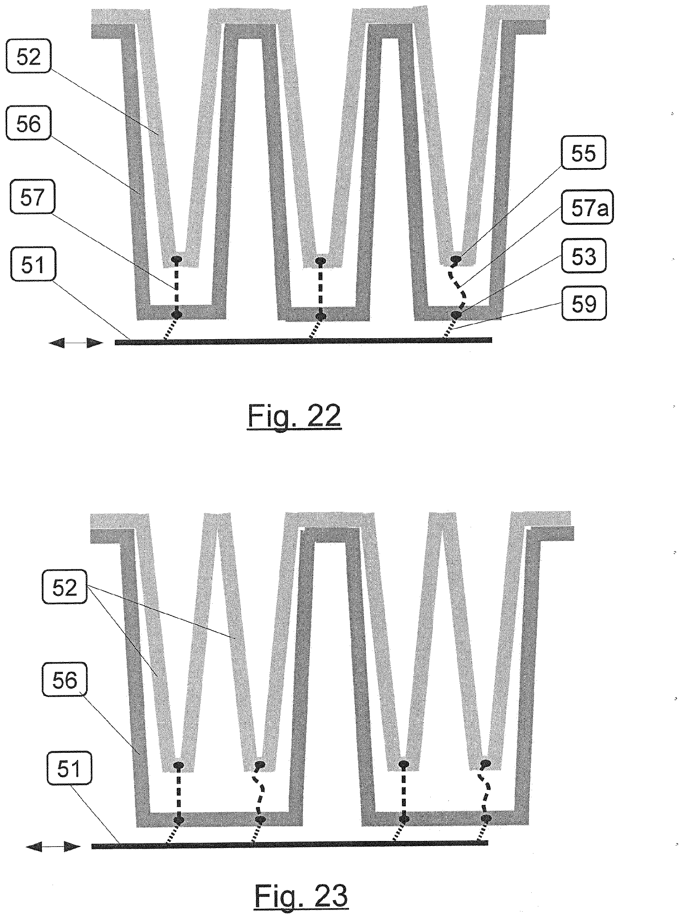

Fig. 22 zeigt einen im Vergleich zu Fig. 21 um 90° gedrehten Querschnitt durch ein Filterelement (hier sind beispielhaft drei Filtertaschen dargestellt).

Fig. 23 zeigt ein Filterelement in einer Darstellung ähnlich Fig. 22, jedoch mit einer unterschiedlichen Anzahl von Filtertaschen für eine Grob- und Feinabscheidung. Hier sind beispielhaft dargestellt jeweils zwei Grobfiltertaschen, die mit einer Feinfiltertasche in Reihe geschaltet sind, dargestellt. Durch diese Art der Anordnung können vorteilhafterweise unterschiedliche Filterflächen in verschiedenen Filterklassen realisiert werden.

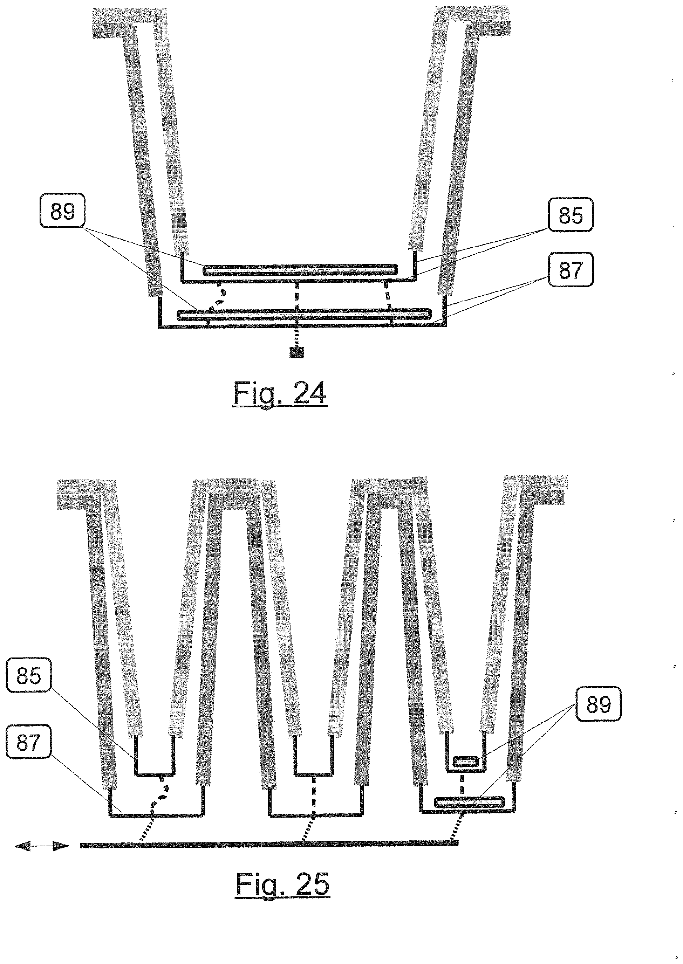

Fig. 24 zeigt einen Längsschnitt durch ein Filterelement ähnlich Fig. 21. Bei dem Filterelement nach Fig. 24 sind jedoch die Filterelemente 52, 56 im unteren Teil mit Staubfangwannen 85, 87 ausgerüstet. Diese Wannen 85, 87 bestehen vorzugsweise aus nicht gasdurchlässigem Material, beispielsweise aus warmfestem Stahl, wie beispielsweise 1.4828, und sie können vorteilhafterweise optional mit elektrischen Zündvorrichtungen 89 ausgestattet werden. Diese Wannen 85, 87 können alternativ vorteilhafterweise auch aus gasdurchlässigem Material, wie beispielsweise metallischem Filtermaterial, bestehen. Mit Hilfe der vorgesehenen Zündvorrichtungen kann der nach der Regeneration der Filterelemente heruntergefallene Staub kontrolliert entzündet werden, wodurch sich sein Volumen vorteilhafterweise deutlich verringern lässt.

Eine Ableitung des heruntergefallenen Staubes über am Boden der Filterelemente befindliche Drainagen, vorteilhafterweise entsprechend zu den in der EP 0 876 190 A1 beschriebenen, wird diesbezüglich hiermit explizit als referenziert.

Fig. 25. zeigt einen im Vergleich zu Fig. 24 um 90° gedrehten Querschnitt durch ein Filterelement mit Staubsammelkammern 85, 87 und elektrischen Zündvorrichtungen 89 (hier sind beispielhaft drei Filtertaschen dargestellt).

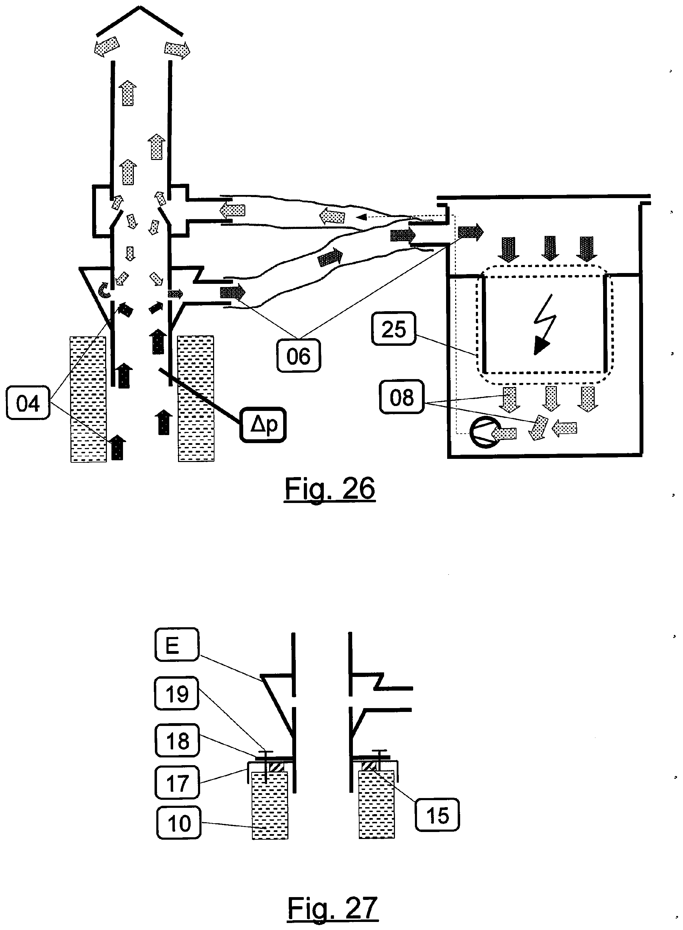

Fig. 26 zeigt beispielhaft eine Anordnung eines Feinstaubabscheiders, wobei ein elektrostatischer Abscheider 25, vorliegend ein E-Filter 25, zur Staubabscheidung eingesetzt wird. Vorteilhafterweise ist auch eine Kombination aus einem E-Filter und einem filterndem Abscheider vorgesehen. Zusätzlich ist in Fig. 26 eine Druckmessung Δp innerhalb des Kamins dargestellt, mit der die Steuerung des Ventilators vorteilhafterweise beeinflusst werden kann. Hierdurch kann beispielsweise verhindert werden, dass der Ofen aufgrund des Ventilatorbetriebes durch einen zu hohen Unterdruck im Kamin zu viel Verbrennungsluft ansaugt und damit unbeabsichtigt mit zu hoher Leistung betrieben wird. Diese Druckmessung kann vorteilhafterweise in Kombination mit unterschiedlichen Gasreinigungsverfahren, wie Oberflächen- und/oder Tiefenfilter und/oder E-Filter eingesetzt werden.

Fig. 27 zeigt beispielhaft eine Art der Befestigung einer Absaugeinheit E an einem Kamin 10, bei der eine Halteplatte 18 fest mit dem unteren Teil der Absaugeinheit E verbunden, beispielsweise verschweißt ist. Die Befestigung 19 am Kamin erfolgt durch beispielhaft durch eine Verschraubung durch die Halteplatte in den Kamin hinein. Dargestellt ist ebenfalls eine Wetterschutzplatte 17 die beispielsweise Regenwasser so ableitet, dass es nicht auf die obere Krone des Kamins oder in dessen Inneres gelangen kann. Zur Verminderung von Leckageströmungen kann eine Dichtung 15 verwendet werden, die beispielsweise aus Mineralwolle besteht.

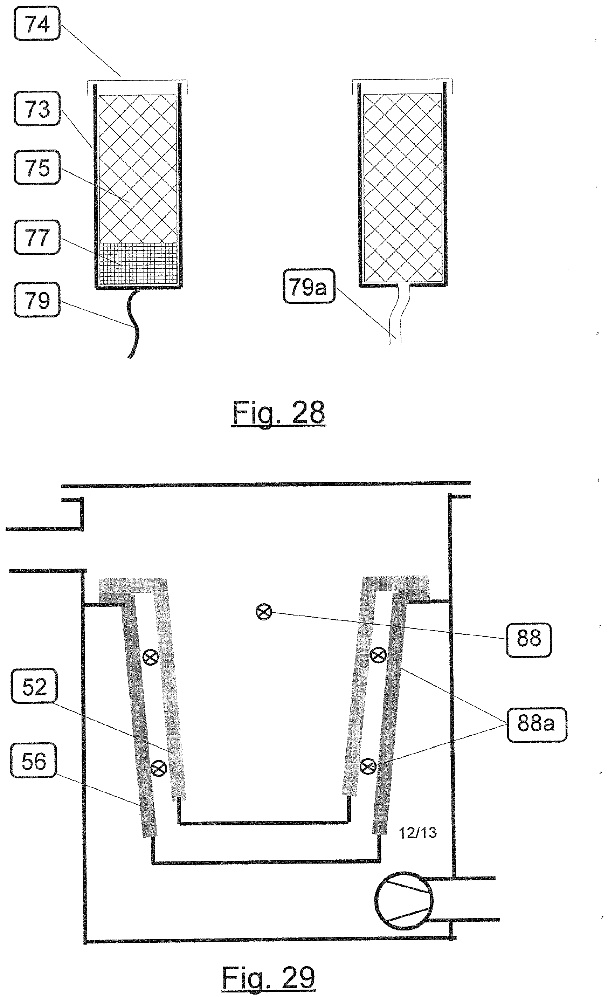

Fig. 28 zeigt beispielhaft zwei Ausführungen einer Precoateinbringung, jeweils ausgeführt in Patronenform mit einem Patronengehäuse 73, einem Deckel 74, dem Precoatmaterial 75 wie beispielsweise Kalk. In der linken Abbildung wird der Kalk mittels einer Treibladung 77 ausgebracht und fluidisiert. In der rechten Abbildung mittels einer externen Druckgaszufuhr, wie beispielsweise einem Druckluftschlauch.

Die Treibladung besteht beispielsweise aus einem Druckgas oder einer geringen Mengen an Explosivstoff und kann über eine Fernauslösung 79 beispielsweise elektrisch aktiviert werden. Die Treibladung führt zu einer Druckerhöhung innerhalb des Patronengehäuses, so dass der Deckel 74 abgelöst wird und das Precoatmaterial fein verteilt wird. Durch diese feine Verteilung des Precoatmaterials wird bewirkt, dass sich das Material als eine dünne Schicht auf dem Filtermaterial 52, 56 ablegt. Diese sog. "Bepuderung" kann dadurch verstärkt werden, dass der Ventilator auf möglichst hoher Stufe läuft und dadurch die Anlagerung des Precoatmaterial bevorzugt auf dem gasdurchströmtem Filtermaterial erfolgt. Hierdurch entsteht anströmseitig auf dem Filtermaterial eine trockene und leicht abzureinigende Schicht. Wenn nachfolgend die Filtermaterialien mit klebrigen Partikeln, wie beispielsweise kondensatbehaftetem Feinstaub, beaufschlagt werden, lagern sich die klebrigen Partikel auf der anströmseitigen Precoatschicht ab und haben weniger die Möglichkeit, das Filtermaterial selbst zu verkleben. Bei der Abreinigung des Filters erfolgt daher eine einfache Trennung beispielsweise der trockenen Kalkschicht mit den darauf abgeschiedenen klebrigen Partikel. Der Deckel 74 schützt das Precoatmaterial 75 während des Betriebes bis zum Einsatz der Patrone vor eindringender Feuchtigkeit und Verschmutzung.

Fig. 29 zeigt beispielhaft die Einbringung von Benetzungsmittel. Anströmseitig des Vorfilters (52) ist hier beispielhaft eine Einbringung von Benetzungsmittel 88 dargestellt. Aufgrund des relativ engen Zwischenraums zwischen dem Vorfiltermaterial 52 und dem Feinfiltermaterial 56 sind anströmseitig vom Feinfiltermaterial mehrere Einbringungen für Benetzungsmittel 88a dargestellt. Das Benetzungsmittel kann beispielsweise bevorzug über Ein- aber auch über Zweistoffdüsen eingebracht werden. Vorteilhafterweise sind diese Düsen mit einem Deckel (ähnlich Pos. 74 in Fig. 28) zum Schutz gegen Verschmutzungen ausgestattet, der bei Betriebsbeginn durch das Benetzungsmittel aufgedrückt wird.

Die generelle Brandsicherheit des Kaminfilters ist aufgrund des Gehäuses gegeben, dass aus einer feuerfesten Konstruktion, bevorzugt aus Sandwichplatten aus Blech-Mineralwolle-Blech besteht. Hintergrund der Einbringung von Benetzungsmittel ist die Sicherstellung von langzeitstabilen Filtrationsergebnissen durch den Schutz der Filtermaterialien vor thermischer Schädigung durch auf den Filtermaterialien abgeschiedene verschwelende Feinstäube.

Die Möglichkeit von Schwelbränden bzw. der Selbstentzündung kohlenstoffhaltiger Substanzen, insbesondere bei gleichzeitiger Anhaftung flüchtiger Substanzen, ist aus der allgemeinen Betriebspraxis beispielsweise von Aktivkohlefiltern bekannt. Da auch kohlenstoffhaltige Stoffe mit anhaftenden flüchtigen Substanzen abgeschieden werden, können diese Effekte nicht ausgeschlossen werden - insbesondere bei einem Eintrag von Funken. Zur Abwendung dieser Gefahr kann das Niederschlagsgitter 29 gleichzeitig als Funkenschutzgitter ausgeführt werden.

Um die Oberfläche des abgeschiedenen Feinstaubs möglichst reaktionsträge zu machen, sollte diese möglichst kompakt sein. Besonders nach der Abreinigung der Filterelemente liegt der abgeschiedene Feinstaub in einer lockeren Form vor. Durch die gezielte Einbringung eines Benetzungsmittels, wie beispielsweise Wasser, dass mit Frostschutzmittel angereichert sein kann, wird dieser lockere abgereinigte Feinstaub, vor allem an seiner Oberfläche benetzt, geglättet und kompaktiert. Da sich dieser Abreinigungsvorgang vor allem auf den an der Anströmseite des Filtermaterials bezieht, ist eine anströmseitige Einbringung des Benetzungsmittels zu bevorzugen.

Als eine weitere optionale Gegenmaßnahme gegen Schwelbrände kann eine inertisierende Atmosphäre, beispielsweise aus Stickstoff oder Kohlendioxid, gezielt in das Filtergehäuse eingebracht werden.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 2: Umgebungsluft/Falschluft (Feinstaubgehalt z.B. 0 mg/m³_{N})
- 4: Rohgas (Feinstaubgehalt z.B. 100 mg/m³_{N})
- 6: Rohgas verdünnt mit rezirkuliertem Reingas (Feinstaubgehalt z.B. 85 mg/m³_{N})
- 7: Rauchgas durch Vorfilter gereinigt (Feinstaubgehalt z.B. 50 mg/m³_{N})
- 8: Reingas (Feinstaubgehalt z.B. 10 mg/m3N)
- 9: Rohgas verdünnt mit Falschluft (Feinstaubgehalt z.B. 80 mg/m³_{N})
- 10: Rauchgasweg, beispielsweise Kamin
- 12: Abgasrohr
- 14: Wetterschutz und Isolierung
- 15: Dichtung, beispielsweise Mineralwolle
- 16: Regenschutz
- 17: Wetterschutzplatte
- 18: Halteplatte
- 19: Befestigung am Kamin
- 20: Vorrichtung zur elektrostatischen Voragglomeration
- 22: Sprühelektrode
- 24: Isolator
- 25: elektrostatischer Abscheider/E-Filter
- 26: Hochspannungsgenerator
- 27: Separater Geruchsfilter, beispielsweise mit Aktivkohle und optional vorgeschaltetem Fettfang (Drahtgestrickfilter) und optional vorgeschaltetem Brandschutz (Wirbelstromfilter)
- 28: Hochspannungskabel
- 29: Niederschlaggitter/Funkenschutzgitter
- 30: Absaugeinheit
- 32: Anschlussrohr an Abgassystem
- 34: Absaugöffnung(en)
- 36: Absaugraum
- 37: Austrittsrohr
- 38: Verbindungseinheit/Verbindungsmittel von Absaugeinheit zur Filtereinheit
- 40: Rezirkulationseinheit
- 44: Rezirkulationsraum
- 46: Rezirkulationsöffnung(en)
- 47: Rezirkulationsanschluss
- 48: Verbindungseinheit/Verbindungsmittel von Filtereinheit zur Rezirkulationseinheit
- 49: Leitblech(e)
- 50: Filterelement
- 51: Stange/Abreinigungsstange
- 52: Vorfilter/Grobfilter
- 53: Stange/Längsstange am/im Boden des Feinfilters
- 54: Trennschicht
- 55: Stange/Längsstange am/im Boden des Vorfilters
- 56: Feinfilter
- 57: Verbindungselement (fest)/feste Verbindung zwischen 53 und 55
- 57a: Verbindungselement (flexibel)/flexible bzw. lose Verbindung zwischen 53 und 55
- 58: Formgebungselement
- 59: Verbindungselement/Verbindung zwischen 53 und 51
- 60: Filtereinheit
- 61: Feuchtesensor
- 62: Filtergehäuse
- 63: Bodenmatte zur Aufnahme und Verdunstung von Kondensat, beispielsweise aus Mineralwolle
- 63a: Drainageanschluss
- 64: Wartungsdeckel
- 65: Lüfter
- 66: Rohgaseintritt
- 67: Seitenkammer
- 68: Reingasaustritt
- 69: Aufnahme für Filterelement
- 70: Trennwände für Reihenschaltung von Filterelementen
- 71: Precoateinbringung, anströmseitig vom Filtermaterial, bevorzugt im Batchverfahren, beispielsweise über mindestens ein Patrone
- 72: Schalldämpfer
- 73: Gehäuse Precoatpatrone
- 74: Deckel Precoatpatrone
- 75: Precoatmaterial, beispielsweise Kalk
- 76: Umschalteinheit zwischen Schalldämpfer und Zusatzfilter
- 77: Treibladung für Precoatmaterial, beispielsweise Druckgas, Explosivladung oder dergleichen
- 78: Zusatzfilter
- 79: Fernauslösung Treibladung, beispielsweise elektrisch
- 79a: Anschluss für externe Druckgaszuführung, beispielsweise Druckluftschlauch
- 80: zusätzliche integrierte Gasreinigungseinheiten, den Feinstaubfilterelementen vorgeschaltet, zur Entschwefelung beispielsweise mit Kalk bzw. zur Geruchsminderung beispielsweise mit Aktivkohle bestückt
- 82: zusätzliche integrierte Gasreinigungseinheiten, in die Feinstaubfilterelemente integriert, zur Entschwefelung beispielsweise mit Kalk bzw. zur Geruchsminderung beispielsweise mit Aktivkohle bestückt
- 84: zusätzliche integrierte Gasreinigungseinheiten, den Feinstaubfilterelementen nachgeschaltet, zur Entschwefelung beispielsweise mit Kalk bzw. zur Geruchsminderung beispielsweise mit Aktivkohle bestückt
- 85: Wanne/Staubfangwanne für Grobfilter
- 87: Wanne/Staubfangwanne für Feinfilter
- 88: Einbringung für Benetzungsmittel, hier beispielsweise anströmseitig von Vorfilter
- 88a: Einbringung für Benetzungsmittel, hier beispielsweise anströmseitig von Feinfilter
- 89: elektrische Zündvorrichtung (optional), für Staub
- 90: Isolierung
- 91: Heizelement(e)
- 92: Stutzen
- 93: Regelorgan für Falschluft
- 94: Stutzen für Heißluft-/Heißgaszustrom
- 95: Spannschellen
- 96: Schlauchschutz
- 97: Innenschlauch
- 98: Außenschlauch
- E: Absaugeinheit
- T1: Temperaturmessstelle Kamin unten, unterhalb Anschlussstück 32
- T2: Temperaturmessstelle Filtereintritt
- T3: Temperaturmessstelle Rezirkulationsraum
- T4: Temperaturmessstelle Abgaskernstrom, etwa in Höhe Rezirkulationsraum
- T5: Temperaturmessstelle Kamin oben, kurz unterhalb Austritt an Atmosphäre
- T6: Temperaturmessstelle Atmosphäre
- T7: Temperaturmessstelle Reingas, nach Ventilator
- Tₘᵢₙ: Minimaltemperatur Filterelement(e)
- Tₘₐₓ: Maximaltemperatur Filterelement(e)
- Δp: Druckmessung im Kamin, vorteilhafterweise auch Differenzdruck zur Atmosphäre und/oder zum Aufstellungsraum der Feuerung (in Kombination mit Filter und/oder E-Filter)

## Patentansprüche

1. Vorrichtung für Festbrennstoff-Kleinfeuerungsanlagen zur Filterung von Feinstaub, Kondensat und/oder Kondensatbestandteilen mit einer Absaugeinheit (30) umfassend
- ein Anschlussrohr (32) zur Verbindung der Absaugeinheit (30) mit einem Rauchgasweg (10), aus welchem von einer Feuerung ein Rauchgas (04) strömt, und
- eine Absaugöffnung (34),
und
einer Filtereinheit (60) umfassend
- eine mit der Absaugöffnung (34) der Absaugeinheit (30) mittels einer ersten Verbindungseinheit (38) verbundene Eintrittsöffnung (66),
- eine Austrittsöffnung (68),
- ein zwischen der Eintrittsöffnung (66) und der Austrittsöffnung (68) angeordnetes Filterelement (50), umfassend ein Vorfilter (52) und ein dem Vorfilter (52) strömungstechnisch nachfolgendes Feinfilter (56), und
- einen zwischen der Austrittsöffnung (68) und dem Filterelement (50) angeordneten Lüfter (65), welcher dazu eingerichtet ist, einen Ansaugdruck zu erzeugen,
wobei die Absaugeinheit (30) und die Filtereinheit (60) als separate Baugruppen räumlich voneinander getrennt angeordnet und mittels Verbindungseinheiten bzw. -mitteln (38, 48) strömungstechnisch miteinander verbunden bzw. verbindbar sind,
wobei
das einen Vorfilter (52) und einen Feinfilter (56) umfassende Filterelement (50) der Filtereinheit (60) im eingebauten Zustand innerhalb der Filtereinheit (60) durch mechanische Bewegung des Filterelements (50) der Filtereinheit (60) durch Vibration, Klopfen oder Schütteln oder pneumatisch durch Druckstoß oder Druckluftstoß mittels einer Vorrichtung regenerierbar ist bzw. regeneriert wird, wobei das Filterelement für den Vorfilter (52) ein Tiefenfilter zur Abscheidung von Feinstaub, Kondensat und/oder Kondensatbestandteilen gemäß der Filterklasse G4, M5 oder M6 gemäß DIN EN 779 ist und das Filterelement für den Feinfilter (56) ein Tiefenfilter zur Abscheidung von Feinstaub, Kondensat und/oder Kondensatbestandteilen gemäß der Filterklasse F7 bis F9 gemäß DIN EN 779 ist.

2. Vorrichtung nach Anspruch 1, wobei das Filterelement (50) der Filtereinheit (60) ein Filtermaterial aus Metall, Textil, Filz und/oder Keramik, insbesondere in Form von Fasern, aufweist.

3. Vorrichtung nach Anspruch 1 oder Anspruch 2, wobei die Filtereinheit (60) mindestens ein Formgebungselement (58) aufweist, welches dazu eingerichtet ist, einem Zusammenfallen von Filterelementen (50) entgegenzuwirken, insbesondere bei einem Betrieb der Vorrichtung mit geringen Volumenströmen.

4. Vorrichtung nach einem der Ansprüche 1 bis 3, wobei die Filtereinheit (60) ein zusätzliches Filterelement (78) aufweist, welches dem Filterelement (50) nachgeschaltet ist.

5. Vorrichtung nach Anspruch 4, wobei diese ferner einen Schalldämpfer (72) und eine Umschalteinheit (76) umfasst, welche dazu eingerichtet ist, ein das Filterelement (50) bereits durchlaufenes Gas anschließend dem zusätzlichen Filterelement (78) oder dem Schalldämpfer (72) zuzuführen.

6. Vorrichtung nach einem der Ansprüche 1 bis 5, wobei die Filtereinheit (60) ferner mindestens eine Zusatzfunktion zur Feinstaubabscheidung aufweist, eine Entschwefelungseinrichtung (80, 82, 84) und/oder eine integrierte Geruchsabscheidung (80, 82, 84) und/oder eine separate Geruchsabscheidung (27).

7. Vorrichtung nach einem der Ansprüche 1 bis 6, wobei Mittel bzw. Einrichtungen vorgesehen sind, die eine Veränderung der Rauchgastemperatur vor einem ersten Kontakt des Rauchgases mit dem Filtermaterial bewirken, umfassend:
- eine Erwärmung des Rauchgases durch elektrische Heizelemente (91) und/oder durch den Zustrom von Heißluft bzw. Heißgas,
oder
- eine Abkühlung des Rauchgases durch Falschluft (02).

8. Vorrichtung nach einem der Ansprüche 1 bis 7, wobei eine Filtersteuerung mittels drahtloser Datenübertragungsverfahren oder leitungsgebundener Datenübertragungsverfahren eine Überwachung des Betriebes, eine Fernparametrierung und/oder eine Fernsteuerung ermöglicht.

9. Vorrichtung nach einem der Ansprüche 1 bis 8, wobei anströmseitig des Vorfilters (52) des Filterelements (50) der Filtereinheit (60) eine Einbringung von mit einem Frostschutzmittel angereichertem Wasser als Benetzungsmittel (88 / 88a) mittels Ein- oder Zweistoffdüsen vorgesehen ist.

10. Vorrichtung nach einem der Ansprüche 1 bis 9, wobei unterhalb des Filterelements bzw. der Filterelemente mindestens eine Staubfangwanne (85, 87) zur Ablagerung von abgereinigtem Staub vorgesehen ist.

11. Vorrichtung nach Anspruch 10, wobei im Bereich der mindestens einen Staubfangwanne (85, 87) elektrische Zündvorrichtungen für den abgeschiedenen Staub sowie das Kondensat vorgesehen sind.

12. Vorrichtung nach einem der Ansprüche 1 bis 11, wobei ein im Bereich der Absaugöffnung (34) der Absaugeinheit (30) angeordneter Temperaturfühler (T1) vorgesehen ist, welcher dazu eingerichtet ist, bei Überschreiten einer vordefinierten Temperatur des Rauchgases (04) den Lüfter (65) der Filtereinheit (60) zu aktivieren, wobei vorzugsweise eine Druckmessung (Δp) zumindest im Kamin vorgesehen ist.

13. Vorrichtung nach einem der Ansprüche 1 bis 12, wobei am Filterboden der Filtereinheit (60) eine Bodenmatte (63) zur Aufnahme und späteren Verdampfung von beim Anfahren anfallenden Kondensat angebracht oder angeordnet ist, und/oder wobei ein Feuchtesensor (61) im Bereich des Filterbodens der Filtereinheit (60) zur Erkennung von übermäßigem Kondensatausfall vorgesehen ist, und/oder wobei entstehendes Kondensat über einen Drainageanschluss (63a) der Filtereinheit (60) abgeführt und/oder durch einen Feuchtesensor (61) detektiert und gemeldet werden kann.

## Claims

1. A device for small solid fuel firing systems for filtering fine dust, condensate and/or condensate constituents with
a suction unit (30) comprising
- a connecting pipe (32) for connecting the suction unit (30) to a flue gas path (10) from which a flue gas (04) flows from a furnace, and
- a suction opening (34),
and
a filter unit (60) comprising
- an inlet opening (66) connected to the suction opening (34) of the suction unit (30) by means of a first connecting unit (38),
- an outlet opening (68),
- a filter element (50) arranged between the inlet opening (66) and the outlet opening (68), comprising a pre-filter (52) and a fine filter (56) following the pre-filter (52) in terms of flow, and
- a fan (65) arranged between the outlet opening (68) and the filter element (50), which is set up to generate an intake pressure,
wherein the suction unit (30) and the filter unit (60) are arranged spatially separated from one another as separate assemblies and are connected or can be connected to one another by means of connecting units or means (38, 48),
wherein
the filter element (50) of the filter unit (60), comprising a pre-filter (52) and a fine filter (56), can be regenerated or is regenerated in the installed state within the filter unit (60) by mechanical movement of the filter element (50) of the filter unit (60) by vibration, tapping or shaking or pneumatically by pressure surge or compressed air surge by means of a device wherein the filter element for the pre-filter (52) is a depth filter for separating fine dust, condensate and/or condensate constituents in accordance with filter class **G4,** M5 or M6 in accordance with **DIN EN** 779 and the filter element for the fine filter (56) is a depth filter for separating fine dust, condensate and/or condensate constituents in accordance with filter class F7 to F9 in accordance with DIN EN 779.

2. The device according to claim 1, wherein the filter element (50) of the filter unit (60) comprises a filter material made of metal, textile, felt and/or ceramic, in particular in the form of fibres.

3. The device according to claim 1 or claim 2, wherein the filter unit (60) has at least one shaping element (58) which is set up to counteract a collapse of filter elements (50), in particular when the device is operated with low volume flows.

4. The device according to any one of claims 1 to 3, wherein the filter unit (60) comprises an additional filter element (78) which is connected downstream of the filter element (50).

5. The device according to claim 4, wherein it further comprises a silencer (72) and a switch-over unit (76) which is set up to subsequently feed a gas that has already passed through the filter element (50) to the additional filter element (78) or the silencer (72).

6. The device according to any one of claims 1 to 5, wherein the filter unit (60) further comprises at least one additional function for fine dust separation, a desulphurisation device (80, 82, 84) and/or an integrated odour separation (80, 82, 84) and/or a separate odour separation (27).

7. The device according to any one of claims 1 to 6, wherein means or devices are provided which effect a change in the flue gas temperature prior to a first contact of the flue gas with the filter material, comprising:
- heating of the flue gas by electric heating elements (91) and/or by the flow of hot air or hot gas,
or
- cooling of the flue gas through false air (02).

8. The device according to any one of claims 1 to 7, wherein a filter control by means of wireless data transmission methods or wired data transmission methods enables monitoring of the operation, remote parameterisation and/or remote control.

9. The device according to any one of claims 1 to 8, wherein an introduction of water enriched with an antifreeze agent as wetting agent (88 / 88a) is provided on the upstream side of the pre-filter (52) of the filter element (50) of the filter unit (60) by means of single- or dual-substance nozzles.

10. The device according to any one of claims 1 to 9, wherein at least one dust collecting trough (85, 87) for depositing cleaned dust is provided below the filter element or filter elements.

11. The device according to claim 10, wherein electrical ignition devices for the separated dust and the condensate are provided in the region of the at least one dust collecting trough (85, 87).

12. The device according to any one of claims 1 to 11, wherein a temperature sensor (T1) arranged in the region of the suction opening (34) of the suction unit (30) is provided, which is set up to activate the fan (65) of the filter unit (60) when a predefined temperature of the flue gas (04) is exceeded, wherein preferably a pressure measurement (Δp) is provided at least in the chimney.

13. The device according to any one of claims 1 to 12, wherein a bottom mat (63) is attached or arranged at the filter bottom of the filter unit (60) for receiving and later evaporating condensate occurring during start-up, and/or wherein a moisture sensor (61) is provided in the region of the filter bottom of the filter unit (60) for detecting excessive condensate failure, and/or wherein resulting condensate can be discharged via a drainage connection (63a) of the filter unit (60) and/or can be detected and signalled by a moisture sensor (61).

## Revendications

1. Dispositif pour petites installations de combustion à combustible solide destiné à filtrer les poussières fines, le condensat et/ou les composants du condensat avec
d'une unité d'aspiration (30) comprenant
- un tuyau de raccordement (32) pour relier l'unité d'aspiration (30) à un trajet de gaz de fumée (10), à partir duquel un gaz de fumée (04) s'écoule d'un foyer, et
- un orifice d'aspiration (34),
et
une unité de filtration (60) comprenant
- une ouverture d'entrée (66) reliée à l'ouverture d'aspiration (34) de l'unité d'aspiration (30) au moyen d'une première unité de liaison (38),
- une ouverture de sortie (68),
- un élément filtrant (50) disposé entre l'ouverture d'entrée (66) et l'ouverture de sortie (68), comprenant un pré-filtre (52) et un filtre fin (56) faisant suite au pré-filtre (52) du point de vue de l'écoulement, et
- un ventilateur (65) disposé entre l'ouverture de sortie (68) et l'élément filtrant (50), lequel est adapté pour générer une pression d'aspiration,
dans lequel l'unité d'aspiration (30) et l'unité de filtration (60) étant disposées en tant qu'ensembles séparés dans l'espace et étant reliées ou pouvant être reliées entre elles du point de vue de la technique d'écoulement au moyen d'unités ou de moyens de liaison (38, 48),
dans lequel
l'élément filtrant (50) de l'unité de filtration (60) comprenant un pré-filtre (52) et un filtre fin (56) peut être régénéré ou est régénérable à l'état monté à l'intérieur de l'unité de filtration (60) par un mouvement mécanique de l'élément filtrant (50) de l'unité de filtration (60) par vibration, battement ou secousse ou pneumatiquement par coup de pression ou coup d'air comprimé au moyen d'un dispositif l'élément filtrant pour le pré-filtre (52) étant un filtre en profondeur pour la séparation de la poussière fine, du condensat et/ou des composants du condensat selon la classe de filtre G4, M5 ou M6 selon DIN EN 779 et l'élément filtrant pour le filtre fin (56) étant un filtre en profondeur pour la séparation de la poussière fine, du condensat et/ou des composants du condensat selon la classe de filtre F7 à F9 selon DIN EN 779.

2. Dispositif selon la revendication 1, dans lequel l'élément filtrant (50) de l'unité de filtration (60) comprend un matériau filtrant en métal, textile, feutre et/ou céramique, notamment sous forme de fibres.

3. Dispositif selon la revendication 1 ou la revendication 2, dans lequel l'unité de filtration (60) comprend au moins un élément de mise en forme (58) adapté pour s'opposer à l'effondrement d'éléments de filtration (50), notamment lors d'un fonctionnement du dispositif avec de faibles débits.

4. Dispositif selon l'une des revendications 1 à 3, dans lequel l'unité de filtration (60) comprend un élément de filtration supplémentaire (78) placé en aval de l'élément de filtration (50).

5. Dispositif selon la revendication 4, dans lequel celui-ci comprend en outre un silencieux (72) et une unité de commutation (76) qui est adaptée pour amener ensuite un gaz ayant déjà traversé l'élément filtrant (50) à l'élément filtrant supplémentaire (78) ou au silencieux (72).

6. Dispositif selon l'une des revendications 1 à 5, dans lequel l'unité de filtration (60) comporte en outre au moins une fonction supplémentaire de séparation des particules fines, un dispositif de désulfuration (80, 82, 84) et/ou une séparation des odeurs intégrée (80, 82, 84) et/ou une séparation des odeurs séparée (27).

7. Dispositif selon l'une quelconque des revendications 1 à 6, dans lequel il est prévu des moyens ou des dispositifs qui provoquent une modification de la température des fumées avant un premier contact des fumées avec le matériau filtrant, comprenant :
- un chauffage des fumées par des éléments chauffants électriques (91) et/ou par l'arrivée d'air chaud ou de gaz chaud,
ou
- un refroidissement des fumées par de l'air parasite (02).

8. Dispositif selon l'une des revendications 1 à 7, dans lequel une commande de filtrage au moyen de procédés de transmission de données sans fil ou de procédés de transmission de données filaires , permet une surveillance du fonctionnement, un paramétrage à distance et/ou une commande à distance.

9. Dispositif selon l'une des revendications 1 à 8, dans lequel il est prévu, en amont du pré-filtre (52) de l'élément filtrant (50) de l'unité de filtration (60), un apport d'eau enrichie en antigel comme agent mouillant (88 / 88a) au moyen de buses mono ou bi-fluides.

10. Dispositif selon l'une des revendications 1 à 9, dans lequel il est prévu en dessous du ou des éléments filtrants au moins un bac de récupération des poussières (85, 87) pour déposer les poussières nettoyées.

11. Dispositif selon la revendication 10, dans lequel des dispositifs d'allumage électriques pour la poussière séparée ainsi que pour le condensat sont prévus dans la zone de l'au moins un bac collecteur de poussière (85, 87).

12. Dispositif selon l'une des revendications 1 à 11, dans lequel il est prévu une sonde de température (T1) disposée au niveau de l'ouverture d'aspiration (34) de l'unité d'aspiration (30), laquelle est agencée pour activer le ventilateur (65) de l'unité de filtration (60) en cas de dépassement d'une température prédéfinie des fumées (04), une mesure de pression (Δp) étant de préférence prévue au moins dans la cheminée.

13. Dispositif selon l'une des revendications 1 à 12, dans lequel une natte de fond (63) est appliquée ou disposée sur le fond filtrant de l'unité de filtration (60) pour recevoir et évaporer ultérieurement le condensat produit lors du démarrage, et/ou dans lequel un capteur d'humidité (61) est prévu dans la zone du fond filtrant de l'unité de filtration (60) pour détecter une défaillance excessive du condensat, et/ou dans lequel le condensat produit peut être évacué par un raccord de drainage (63a) de l'unité de filtration (60) et/ou peut être détecté et signalé par un capteur d'humidité (61).
